# FASCICULE DE BREVET EUROPEEN

(11) **EP 3 129 874 B1**
(45) Date de publication et mention de la délivrance du brevet: **13.06.2018**
(21) Numéro de dépôt: 15716477.3
(22) Date de dépôt: 09.04.2015
(51) Int. Cl.: G06F 9/46, G06F 9/52

(54) **SYSTEME DE CALCUL DISTRIBUE METTANT EN OEUVRE UNE MEMOIRE TRANSACTIONNELLE MATERIELLE DE TYPE NON-SPECULATIF ET SON PROCEDE D'UTILISATION POUR LE CALCUL DISTRIBUE**
SYSTEM FÜR VERTEILTES RECHNEN MIT IMPLEMENTIERUNG EINES NICHTSPEKULATIVEN TRANSAKTIONELLEN HARDWARE-SPEICHERS UND FÜR ZUR VERWENDUNG DAVON FÜR VERTEILTES RECHNEN
DISTRIBUTING COMPUTING SYSTEM IMPLEMENTING A NON-SPECULATIVE HARDWARE TRANSACTIONAL MEMORY AND A METHOD FOR USING SAME FOR DISTRIBUTED COMPUTING

(30) Priorité: 10.04.2014 FR 1453216
(43) Date de publication de la demande: 15.02.2017
(73) Titulaire: Commissariat à l'Énergie Atomique et aux Énergies Alternatives, 75015 Paris (FR)
(72) Inventeur: PEETERS, Julien, F-28300 Leves (FR); VENTROUX, Nicolas, F-91300 Massy (FR); SASSOLAS, Tanguy, F-75014 Paris (FR); SHAPIRO, Marc, F-75014 Paris (FR)
(74) Mandataire: Priori, Enrico
(86) Numéro de dépôt international: PCT/EP2015/057733
(87) Numéro de publication internationale: WO 2015/155294

(56) Documents cités:
- WO-A1-2013/147898
- US-A1- 2009 133 032
- US-A1- 2009 183 159
- Chi Minh ET AL: "An effective hybrid transactional memory system with strong isolation guarantees", ACM SIGARCH Computer Architecture News, 9 juin 2007 (2007-06-09), pages 69-80, XP055167048, DOI: 10.1145/1273440.1250673 Extrait de l'Internet: URL:http://portal.acm.org/citation.cfm?id= 1250673 [extrait le 2015-02-03]

## Description

L'invention porte sur un système de calcul distribué mettant en oeuvre une mémoire transactionnelle matérielle de type non-spéculatif, ainsi que son procédé d'utilisation pour des systèmes de calcul distribués.

Elle relève du domaine des architectures d'ordinateur parallèles, sur puce ou organisées en grille de calcul. Elle concerne en particulier les systèmes de calcul distribué, reparti et/ou redondant pour des applications embarquées ou telles que l'informatique en nuage (« *cloud computing* »), les bases de données, les serveurs Web, le calcul intensif, etc.

Afin de répondre au besoin croissant en performance des applications, le nombre de ressources de calcul (processeurs ou coeurs de processeurs) dans les architectures parallèles est en constante augmentation. Ceci fait émerger à la fois la nécessité et la problématique de programmer efficacement ce type d'architecture pour bénéficier au mieux de la puissance de calcul disponible.

Lors de l'exécution d'une application parallèle, il peut arriver que deux ou plusieurs tâches aient à échanger des données dites partagées. Pour garantir une cohérence du système tout au long de l'exécution de l'application, l'accès au système mémoire doit être protégé. Pour cela, le programmeur déclare des régions dans le code de l'application, appelées sections critiques, qui garantissent un accès exclusif au système mémoire pour toute tâche qui en obtient le droit.

Le modèle à mémoire partagée, majoritaire aujourd'hui, est basé sur l'utilisation de primitives de synchronisation à base de verrous (ou toute variante assimilée à un verrou) pour protéger l'accès aux données partagées au sein des sections critiques. Cependant, ces primitives réalisent difficilement le passage à l'échelle. Cette limitation complexifie la programmation des applications parallèles et nécessite un investissement important en temps pour atteindre un niveau de performance acceptable. En outre, placer un verrou au début d'une section critique garantit uniquement l'accès exclusif à celle-ci, et non aux données partagées elles-mêmes. Dès lors, l'utilisation d'un verrou ne garantit pas la protection effective des données partagées entre les tâches mais seulement l'accès exclusif à la séquence d'instructions qui les utilise. La responsabilité de délimitation des sections critiques est laissée au programmeur ce qui est source d'erreurs importantes.

Afin de tirer au mieux parti de la puissance de calcul présente dans les architectures massivement parallèles modernes, une approche plus prometteuse consiste en l'utilisation de mémoires transactionnelles. Une mémoire transactionnelle transforme chaque accès au système mémoire en une « transaction » qui dispose des propriétés suivantes : atomicité, cohérence, isolation et durabilité (acronyme « A.C.I.D. »).
- « Atomicité » signifie que l'exécution simultanée de plusieurs transactions doit donner le même résultat que leur exécution successive.
- « Cohérence » signifie qu'une transaction doit amener le système d'un état valide à un autre état valide.
- « Isolation » signifie que les mises à jour de données partagées utilisées par la transaction ne sont propagées au reste du système qu'un fois la transaction terminée et donc validée.
- « Durabilité » signifie que les mises à jour une fois propagées ne peuvent plus être annulées.

Le concept de mémoire transactionnelle a été introduit en 1993 par l'article de M. Herliy et J. E. B. Moss « Transactional Memory : Architectural Support for Lock-Free Data », 20th Annual Symposium on Computer Architecture, pages 289 - 300. Cet article divulgue notamment un dispositif matériel de mise en oeuvre d'une mémoire transactionnelle, basé sur une mémoire cache associative. Un inconvénient notable de cette solution est qu'elle est bloquante.

L'article de Nir Shavit et Dan Touitou « Software Transactional Memory » Proceedings of the 14th ACM Symposium on Principles of Distributed Computing, pages 204-213 a proposé une réalisation purement logicielle et non bloquante d'une mémoire transactionnelle.

Ces mémoires transactionnelles connues de l'art antérieur sont de type « spéculatif ». Cela signifie qu'une transaction est initiée en faisant l'hypothèse qu'elle ne conduira pas à un conflit d'accès à la mémoire partagée ; si un tel conflit est détecté en cours d'exécution, la transaction est annulée sans laisser de traces (pour respecter la propriété d'isolation). Dans une mémoire transactionnelle spéculative, les moyens nécessaires pour garantir la cohérence du système sont très coûteux en termes d'empreinte mémoire (espace mémoire nécessaire à la sauvegarde de l'état valide du système avant le début de la transaction), de gestion des retours sur erreur en cas de mauvaise spéculation etc. Ainsi, ces moyens sont inadaptés à des domaines comme les systèmes embarqués. Plus généralement, ils consomment inutilement des ressources qui pourraient être allouées à des tâches de calcul.

Il est également connu de réaliser, de manière logicielle, des mémoires transactionnelles non spéculatives, dans lesquelles d'éventuels conflits sont détectés avant le début d'exécution d'une transaction. L'utilisation des mémoires transactionnelles non-spéculatives permet de diminuer l'empreinte mémoire et d'augmenter l'efficacité énergétique du système par rapport à l'approche spéculative. Cependant, du fait de l'absence de spéculation, toutes les données accédées par une transaction doivent être réservées en une fois (c'est-à-dire de manière atomique) avant que la première opération de la transaction ne soit exécutée, ceci afin de garantir l'absence d'interbolocages (« dead-lock ») lors de la réservation ; cette dernière garantissant les propriétés « A.C.I.D. ». De plus, dans le cas général, une transaction peut accéder à un nombre arbitraire de données ce qui suppose la possibilité de réserver de manière atomique un nombre arbitraire et variable de données. Or, la réservation atomique de plusieurs données dans un système intrinsèquement parallèle tel qu'une architecture de calcul multiprocesseur est un problème non-trivial à résoudre. La réservation comporte deux parties majeures : la déclaration de l'ensemble de données à réserver et la détection de conflits entre cet ensemble et tout autre ensemble de données déjà réservées par une ou plusieurs autres transactions. Une réalisation naïve et simpliste consisterait à utiliser un verrou global qui arrête l'exécution de tout le système le temps de la réservation, ce qui crée un ordre total entre les réservations d'une même donnée et prévient l'apparition d'un interblocage ; cependant, cette solution conduirait à une dégradation inacceptable des performances ; en particulier, elle ignore le cas ou deux transactions réservent deux ensembles de données totalement disjoints.

Le document US 5,742,785 décrit un mécanisme de réservation multiple de données via des registres matériels dédiés, associés à chaque unité de calcul. Le mécanisme permet de vérifier que des données sont réservées et de procéder ensuite à leur écriture atomique en mémoire. Néanmoins, la réservation des données n'est pas, en elle-même, atomique. En effet, pour un ensemble de données de départ, la réservation de certaines données peut échouer et le cas échéant mettre à jour un drapeau de validité lié à chaque donnée non-réservée. L'absence de réservation atomique pour un ensemble de données ne satisfait pas aux conditions nécessaires et suffisantes pour réaliser une mémoire transactionnelle non-spéculative.

Le document WO 2013/147898 divulgue un processeur multi-coeur comprenant un dispositif matériel de traçage pour enregistrer les interactions entre fils d'exécutions (« threads ») ayant accès à une mémoire partagée. Ce dispositif matériel de traçage utilise pour chaque processeur deux filtres de Bloom sans comptage pour stocker séparément les accès en lecture et en écriture à la mémoire partagée d'un ensemble d'accès. Ils sont destinés à identifier les conflits d'accès mémoire lors de la réception de messages de cohérence issus des autres coeurs. Le conflit est caractérisé par l'appartenance aux deux filtres de bloom des adresses concernées par le message de cohérence.

Le document US 2009/0183159 divulgue un procédé de gestion de transactions concurrentes mis en oeuvre par ordinateur et utilisant des filtres de Bloom logiciels. Comme la détection de conflits s'effectue en comparant les transactions deux à deux, cette approche risque de conduire à des ralentissements considérables si le nombre de transactions est élevé.

Le document US 2009/0133032 divulgue un procédé et un appareil de traitement de données utilisant une pluralité de processeurs et mettant en oeuvre une mémoire transactionnelle. La prise en compte des conflits d'accès détectés dans le passé permet, par une sorte d'apprentissage, de minimiser les risques de collision entre les transactions à venir.

L'article de Chi Cao Minh et al « An Effective Hybrid Transactional Memory System with Strong Isolation Guarantees », SIGARCH Computer Architecture News 35, 2 (June 2007), pp. 69-80 décrit un mécanisme qui permet d'accélérer la recherche de conflits dans le cadre de mémoires transactionnelles spéculative. L'accélération est offerte par la présence de filtres de Bloom matériels de type conventionnel (pas à comptage) en support d'un système transactionnel logiciel. Cet accélérateur matériel ne permet pas de réserver plusieurs données de manière atomique.

L'invention vise à remédier aux inconvénients précités de l'art antérieur. Plus particulièrement elle vise à réaliser de manière performante et efficace une mémoire transactionnelle non spéculative permettant de réserver - de manière non bloquante - un ensemble de données de taille variable et arbitraire. Selon un aspect particulièrement avantageux, l'invention met en oeuvre une méthode matérielle et distribuée de détection de conflits présentant un coût fixe en termes de surface de silicium quel que soit le nombre de données manipulées. De plus, la méthode de détection de conflits proposée permet de gérer séparément les transactions disjointes, offrant ainsi un gain de performance supplémentaire et indispensable pour le passage à l'échelle.

Un objet de l'invention est donc un système de calcul distribué comprenant une pluralité d'unités de calcul et au moins une mémoire partagée entre lesdites unités de calcul, caractérisé en ce qu'il comprend au moins un module matériel de détection des conflits d'accès desdites unités de calcul à ladite mémoire partagée ; ledit ou chaque dit module matériel de détection des conflits étant configuré pour :
- mémoriser au moins une structure de données probabiliste, indicative de la totalité des adresses de ladite mémoire partagée impliquées dans la totalité des transactions en cours ;
- recevoir au moins un message indicatif d'une requête d'accès, par une dite unité de calcul, à au moins une adresse de ladite mémoire partagée ;
- déterminer, à partir de ladite structure de données probabiliste, si ladite adresse est déjà impliquée dans une transaction en cours, et transmettre à ladite unité de calcul un message de présence ou absence de conflits d'accès ; et
- recevoir au moins un message indicatif ou confirmatif d'une réservation ou d'une libération d'au moins une dite adresse de ladite mémoire partagée, et mettre à jour ladite structure de données probabiliste pour que les adresses réservées et les adresses libérées soient considérées, respectivement, comme étant/n'étant pas impliquées dans une transaction en cours.

Selon un mode de réalisation, un tel système de calcul distribué peut comprendre :
- au moins un filtre de Bloom matériel, de préférence du type à comptage, pour stocker ladite ou chaque dite structure de données probabiliste ;
- au moins un filtre de Bloom matériel pour stocker temporairement ladite ou chaque dite structure de données probabiliste ;
- au moins un module de fonction de hachage pour adresser lesdits filtres de Bloom ; et
- au moins un circuit logique pour générer un dit message de présence ou absence de conflits d'accès à partir de ladite ou d'au moins une dite structure de données probabiliste, et pour mettre à jour ladite ou au moins une dite structure de données probabiliste suite à la réception d'au moins un message indicatif ou confirmatif d'une réservation ou d'une libération d'au moins une dite adresse de ladite mémoire partagée.

Selon un mode de réalisation, ledit ou chaque dit module matériel de détection des conflits peut être configuré pour :
- recevoir au moins un premier type de message indicatif d'une requête d'accès, par une dite unité de calcul, à au moins une adresse de ladite mémoire partagée ;
- déterminer, à partir de ladite structure de données probabiliste, si ladite adresse est déjà impliquée dans une transaction en cours, et transmettre à ladite unité de calcul au moins un deuxième type de message de présence ou absence de conflits d'accès ;
- recevoir au moins un troisième type de message indicatif d'une requête de libération d'une dite adresse de mémoire partagée, qui n'est plus impliquée dans une transaction et mettre à jour ladite structure de données probabiliste en conséquence ; et
- recevoir au moins un quatrième type de message, indicatif d'une validation ou d'un abandon d'au moins une dite requête d'accès ou de libération et, en cas de validation, mettre à jour ladite structure de données probabiliste en conséquence.

Par ailleurs, ledit ou chaque dit module matériel de détection des conflits d'accès peut comprendre :
- au moins un premier filtre de Bloom matériel pour stocker temporairement une structure de données probabiliste indicative d'au moins une adresse de mémoire indiquée par un message dudit premier type ou dudit troisième type ;
- au moins un deuxième filtre de Bloom matériel, du type à comptage, pour stocker ladite structure de données probabiliste indicative de la totalité des adresses de ladite mémoire partagée impliquées dans une ou plusieurs transactions en cours;
- au moins un circuit logique pour générer un message dudit deuxième type par comparaison entre les structures de données probabilistes mémorisées dans ledit premier et ledit deuxième filtre de Bloom matériel, et pour mettre à jour ladite structure de données probabiliste stockée dans ledit deuxième filtre de Bloom matériel à partir de celle stockée temporairement dans ledit premier filtre de Bloom suite à la réception d'un message dudit quatrième type, indicatif d'une validation d'une requête d'accès ou de libération d'une adresse de ladite mémoire partagée.

En variante, ledit ou chaque dit module matériel de détection des conflits d'accès peut comprendre :
- un premier filtre de Bloom matériel pour stocker temporairement une structure de données probabiliste indicative d'au moins une location de mémoire indiquée par au moins un message dudit premier type, à laquelle une dite unité de calcul requiert un accès en lecture ;
- un deuxième filtre de Bloom matériel, du type à comptage, pour stocker une première partie de ladite structure de données probabiliste indicative de la totalité des locations de ladite mémoire partagée impliquées dans une ou plusieurs transactions en cours, ladite première partie étant indicative de la totalité des locations de ladite mémoire partagée impliquées en lecture dans une ou plusieurs transactions en cours ;
- un troisième filtre de Bloom matériel pour stocker temporairement une structure de données probabiliste indicative d'au moins une location de mémoire indiquée par au moins un message dudit premier type, à laquelle une dite unité de calcul requiert un accès en écriture ;
- un quatrième filtre de Bloom matériel, du type à comptage, pour stocker une seconde partie de ladite structure de données probabiliste indicative de la totalité des locations de ladite mémoire partagée impliquées dans une ou plusieurs transactions en cours, ladite seconde partie étant indicative de la totalité des locations de ladite mémoire partagée impliquées en écriture dans une ou plusieurs transactions en cours ;
- au moins un circuit logique pour générer un message dudit deuxième type par comparaison entre les structures de données probabilistes mémorisées dans ledit premier et ledit deuxième filtre de Bloom matériel ou ledit premier et ledit quatrième filtre de Bloom matériel, pour mettre à jour ladite première partie de ladite structure de données probabiliste stockée dans ledit deuxième filtre de Bloom matériel à partir de celle stockée temporairement dans ledit premier filtre de Bloom suite à la réception d'un message dudit quatrième type, indicatif d'une validation d'une requête d'accès ou de libération d'une location de ladite mémoire partagée, pour générer un message dudit deuxième type par comparaison entre les structures de données probabilistes mémorisées dans ledit troisième et ledit deuxième filtre de Bloom matériel ou ledit troisième et ledit quatrième filtre de Bloom matériel, et pour mettre à jour ladite deuxième partie de ladite structure de données probabiliste stockée dans ledit quatrième filtre de Bloom matériel à partir de celle stockée temporairement dans ledit troisième filtre de Bloom suite à la réception d'un message dudit quatrième type, indicatif d'une validation d'une requête d'accès ou de libération d'une location de ladite mémoire partagée.

Selon un autre mode de réalisation, ledit ou chaque dit module matériel de détection des conflits peut être configuré pour :
- recevoir au moins un premier type de message indicatif d'une requête d'accès, par une dite unité de calcul, à au moins une location de ladite mémoire partagée et mettre à jour ladite structure de données probabiliste en conséquence ;
- déterminer, à partir de ladite structure de données probabiliste, si ladite location est déjà impliquée dans une transaction en cours, et transmettre à ladite unité de calcul au moins un deuxième type de message de présence ou absence de conflits d'accès ;
- recevoir au moins un troisième type de message indicatif d'une requête de libération d'une dite location de mémoire partagée qui n'est plus impliquée dans une transaction et mettre à jour ladite structure de données probabiliste en conséquence.

Dans ce cas, ledit ou chaque dit module matériel de détection des conflits d'accès peut comprendre :
- au moins un filtre de Bloom matériel du type à comptage pour stocker ladite structure de données probabiliste indicative de la totalité des locations de ladite mémoire partagée impliquées dans une ou plusieurs transactions en cours ; et
- au moins un circuit logique pour générer un message dudit deuxième type à partir de ladite structure de données probabiliste et d'un message dudit premier type, et pour mettre à jour ladite structure de données probabiliste stockée dans ledit filtre de Bloom matériel suite à la réception d'un message dudit premier ou dudit troisième type

Dans ce cas, en outre, ledit ou chaque dit module matériel de détection des conflits d'accès peut comprendre :
- un premier filtre de Bloom matériel, du type à comptage, pour stocker une première partie de ladite structure de données probabiliste indicative de la totalité des locations de ladite mémoire partagée impliquées dans une ou plusieurs transactions en cours, ladite première partie étant indicative de la totalité des locations de ladite mémoire partagée impliquées en lecture dans une ou plusieurs transactions en cours ; et
- un deuxième filtre de Bloom matériel, du type à comptage, pour stocker une seconde partie de ladite structure de données probabiliste indicative de la totalité des locations de ladite mémoire partagée impliquées dans une ou plusieurs transactions en cours, ladite seconde partie étant indicative de la totalité des locations de ladite mémoire partagée impliquées en écriture dans une ou plusieurs transactions en cours.

Selon un autre mode de réalisation, ledit ou chaque dit module matériel de détection des conflits d'accès peut comprendre un filtre de Bloom matériel pour stocker temporairement ladite ou chaque dite structure de données probabiliste du type à comptage.

Ledit ou chaque dit module matériel de détection des conflits d'accès peut comprendre une première paire de filtres de Bloom pour la détection de conflits d'accès en lecture et une deuxième paire de filtres de Bloom pour la détection de conflits d'accès en écriture.

Selon un mode de réalisation, un tel système de calcul distribué peut comprendre une pluralité de dits modules matériels de détection des conflits d'accès, associés chacun à un segment de ladite mémoire partagée.

Dans ce cas, chaque unité de calcul peut comprendre un module initiateur d'accès mémoire et un module matériel d'acquisition desdits modules matériels de détection des conflits d'accès, chaque dit module matériel d'acquisition étant configuré pour réaliser une acquisition exclusive et atomique du ou des modules matériels de détection des conflits d'accès nécessaires à la détection des conflits d'accès pour une transaction.

Toujours dans ce cas, en outre, chaque dit module matériel d'acquisition peut être configuré pour :
- recevoir au moins un message indicatif d'une requête d'accès, par ledit module initiateur d'accès mémoire, à une adresse de ladite mémoire partagée ; et identifier, à partir de ce message, le module matériel de détection des conflits d'accès associé à ladite adresse ;
- recevoir et stocker un message indicatif d'un ensemble de modules matériels de détection des conflits d'accès en cours d'utilisation ; puis déterminer, au moyen dudit message stocké, si ledit module matériel de détection identifié est en cours d'utilisation et : s'il ne l'est pas, mettre à jour ledit message indicatif d'un ensemble de modules matériels de détection des conflits d'accès en cours d'utilisation pour indiquer que ledit module matériel de détection des conflits d'accès est désormais en cours d'utilisation et le transmettre, et transmettre audit module matériel de détection identifié ledit message indicatif d'une requête d'accès; autrement transmettre sans modifications ledit message indicatif d'un ensemble de modules matériels de détection des conflits d'accès en cours d'utilisation ; ultérieurement, recevoir à nouveau ledit message indicatif d'un ensemble de modules matériels de détection des conflits d'accès en cours d'utilisation, le mettre à jour pour indiquer que le ou les modules matériels de détection des conflits d'accès associés à la ou aux adresses de mémoire impliquées par ladite transaction ne sont plus en cours d'utilisation et le transmettre ;
- recevoir, d'au moins un module matériel de détection de conflits d'accès, au moins un message de présence ou absence de conflits d'accès et, si au moins un dit message est indicatif de la présence d'un conflit d'accès, transmettre audit ou auxdits modules matériels de détection de conflits d'accès un message d'abandon ou d'annulation de ladite ou de chaque dite requête d'accès ;

- recevoir et stocker un autre message indicatif d'un ensemble de modules matériels de détection des conflits d'accès en cours d'utilisation ; puis recevoir, dudit module initiateur d'accès mémoire, un message indicatif de l'achèvement d'une transaction impliquant une ou plusieurs adresses de ladite mémoire partagée, mettre à jour ledit message indicatif d'un ensemble de modules matériels de détection des conflits d'accès en cours d'utilisation stocké pour indiquer que le ou les modules matériels de détection des conflits d'accès associés à la ou aux adresses de mémoire impliquées par ladite transaction ne sont plus en cours d'utilisation et le transmettre, et transmettre à au moins un module matériel de détection des conflits d'accès au moins un message indicatif d'une requête de libération d'une dite adresse de mémoire partagée, qui n'est plus impliquée dans une transaction.

En outre, lesdits modules matériels d'acquisition peuvent être reliés entre eux par un réseau de communication mettant en oeuvre une technique d'accès exclusif non bloquant.

En outre, lesdits modules matériels d'acquisition peuvent être reliés entre eux par un réseau ayant une topologie logique de type anneau et être configurés pour transmettre de proche en proche sur ledit réseau un jeton transportant ledit message indicatif d'un ensemble de modules matériels de détection des conflits d'accès en cours d'utilisation.

Selon un mode de réalisation, un tel système de calcul distribué peut comprendre une pluralité de tuiles, ladite mémoire partagée et un réseau de communication reliant lesdites tuiles entre elles et à ladite mémoire partagée et au moins un dit module matériel de détection des conflits d'accès, chaque dite tuile comprenant au moins une dite unité de calcul.

Un autre objet de l'invention est un procédé d'utilisation d'un tel système de calcul distribué comprenant les étapes suivantes :
a) utiliser une unité de calcul pour transmettre à au moins un module matériel de détection de conflit d'accès au moins un message indicatif d'une requête d'accès à une adresse d'une mémoire partagée ;
b) utiliser ledit ou chaque dit module matériel de détection de conflits d'accès pour déterminer, à partir d'une structure de données probabiliste respective, indicative d'un ensemble d'adresses de ladite mémoire partagée impliquées dans une transaction en cours, si ladite adresse est déjà impliquée dans une transaction en cours, et pour transmettre un message de présence ou absence de conflits d'accès adressé à ladite unité de calcul ;
c) utiliser ladite unité de calcul pour déterminer, à partir du ou des messages de présence ou absence de conflits d'accès reçus dudit ou de chaque dit module matériel de détection, si une transaction impliquant ladite ou chaque adresse de ladite mémoire partagée peut être effectuée ou pas, et pour transmettre audit ou à chaque dit module matériel de détection au moins un message indicatif d'une réservation ou d'une libération d'au moins une dite adresse de ladite mémoire partagée ; et utiliser ledit ou chaque dit module de détection pour mettre à jour ladite structure de données probabiliste pour que les adresses réservées et les adresses libérées soient considérées, respectivement, comme étant/n'étant pas impliquées dans une transaction en cours.

Selon un mode de réalisation d'un tel procédé :
- ledit système de calcul distribué peut comprendre une pluralité de dites unités de calcul, une dite mémoire partagée et une pluralité de dits modules matériels de détection des conflits d'accès, associés chacun à au moins une plage d'adresses de ladite mémoire partagée ;
- chaque dite unité de calcul comprend un module initiateur d'accès mémoire et un module matériel d'acquisition desdits modules matériels de détection des conflits d'accès ;
ladite étape a) peut comprendre les opérations suivantes :
a1) utiliser un module matériel d'acquisition pour recevoir et stocker un message indicatif d'un ensemble de modules matériels de détection des conflits d'accès en cours d'utilisation ;
a2) utiliser un module initiateur d'accès mémoire associé audit module matériel d'acquisition pour transmettre audit module matériel d'acquisition au moins un dit message indicatif d'une requête d'accès à une adresse de ladite mémoire partagée ;
a3) utiliser ledit module matériel d'acquisition pour identifier le ou les modules matériels de détection des conflits d'accès associés à ladite ou à chaque dite adresse de mémoire ;
a4) déterminer, au moyen dudit message indicatif d'un ensemble de modules matériels de détection des conflits d'accès en cours d'utilisation, si le ou les modules matériels de détection des conflits d'accès associés à ladite ou à chaque dite adresse mémoire de la transaction sont en cours d'utilisation et : s'ils ne le sont pas, leur transmettre ledit message indicatif d'une requête d'accès, mettre à jour ledit message indicatif d'un ensemble de modules matériels de détection des conflits d'accès en cours d'utilisation pour indiquer que ledit ou chaque dit module matériel de détection des conflits d'accès est désormais en cours d'utilisation et le transmettre ; autrement le transmettre sans modification ;
et ladite étape b) peut comprendre les opérations suivantes :
b1) utiliser ledit module matériel d'acquisition pour recevoir, d'au moins un module matériel de détection de conflits d'accès, au moins un message de présence ou absence de conflits d'accès et, si ledit ou tous lesdits messages sont indicatifs d'une absence de conflits d'accès, transmettre audit ou auxdits modules matériels de détection de conflits d'accès des messages confirmatifs desdites requêtes d'accès ;
b2) utiliser ledit module matériel d'acquisition pour recevoir un message indicatif qu'une transaction impliquant une ou plusieurs adresses de ladite mémoire partagée s'est achevée, mettre à jour ledit message indicatif d'un ensemble de modules matériels de détection des conflits d'accès en cours d'utilisation pour indiquer que le ou les modules matériels d'acquisition associés à la ou aux adresses de mémoires impliquées par ladite transaction ne sont plus en cours d'utilisation et le transmettre.

Avantageusement, lesdits modules matériels d'acquisition peuvent être reliés entre eux par un réseau de communication mettant en oeuvre une technique d'accès exclusif non bloquant.

En outre, lesdits modules matériels d'acquisition peuvent être reliés entre eux par un réseau ayant une topologie logique de type anneau, ledit message indicatif d'un ensemble de modules matériels de détection des conflits d'accès en cours d'utilisation étant transmis de proche en proche sur ledit réseau.

D'autres caractéristiques, détails et avantages de l'invention ressortiront à la lecture de la description faite en référence aux dessins annexés donnés à titre d'exemple et qui représentent, respectivement :
- La figure 1, l'architecture d'un système de calcul distribué selon un mode de réalisation de l'invention ;
- La figure 2, l'association entre modules matériels de détection des conflits d'accès et plages de la mémoire distribuée du système de la figure 1 ;
- La figure 3, la synchronisation entre modules matériels d'acquisition des modules de détection des conflits d'accès dans le système de la figure 1 ;
- Les figures 4A et 4B, le diagramme de séquence d'un procédé selon un mode de réalisation de l'invention, mis en oeuvre au moyen du système de la figure 1 ;
- Les figures 5A et 5B, respectivement, le diagramme fonctionnel d'un module matériel d'acquisition des modules de détection des conflits d'accès selon un mode de réalisation possible du système de la figure 1 et un schéma illustrant l'opération de vérification de disponibilité des modules de détections des conflits d'accès ;
- Les figures 6A et 6B, respectivement, le diagramme fonctionnel d'un module matériel de détection des conflits d'accès et un schéma illustrant l'opération de réservation et libération des données selon un mode de réalisation possible du système de la figure 1 ;
- Le figure 7, un détail du diagramme fonctionnel d'un module matériel de détection des conflits d'accès selon un autre mode de réalisation possible du système de la figure 1 ; et
- La figure 8, le diagramme fonctionnel d'un module matériel de détection des conflits d'accès selon un autre mode de réalisation du système de la figure 1.

Un système de calcul selon l'invention peut être mis en oeuvre au moyen d'une architecture d'ordinateur distribuée sur puce ou organisée en grille de calcul. Dans les deux cas, le système présente de préférence une structure modulaire, composée de « tuiles » ou « noeuds » comprenant une ou plusieurs ressources de calcul. Un tel système se caractérise par un mécanisme de verrouillage matériel distribué qui permet l'acquisition atomique de multiples ressources matérielles ou logicielles. Ce mécanisme est basé sur une synchronisation non-bloquante qui permet une vérification de la disponibilité des ressources à acquérir et, le cas échéant, leur acquisition.

Par rapport aux mémoires transactionnelles connues de l'art antérieur, un tel système présente au moins un des avantages suivants :
- Il permet une réservation atomique de plusieurs valeurs (adresses mémoires) ; dès lors, il répond aux conditions nécessaires et suffisantes pour s'appliquer aux mémoires transactionnelles non-spéculatives ;
- Il ne dépend pas d'un mécanisme logiciel ou d'une ressource de calcul supplémentaire pour fonctionner ;
- Son coût silicium et son empreinte mémoire sont fixes pour une architecture matérielle donnée indépendamment de toute caractéristique logicielle.

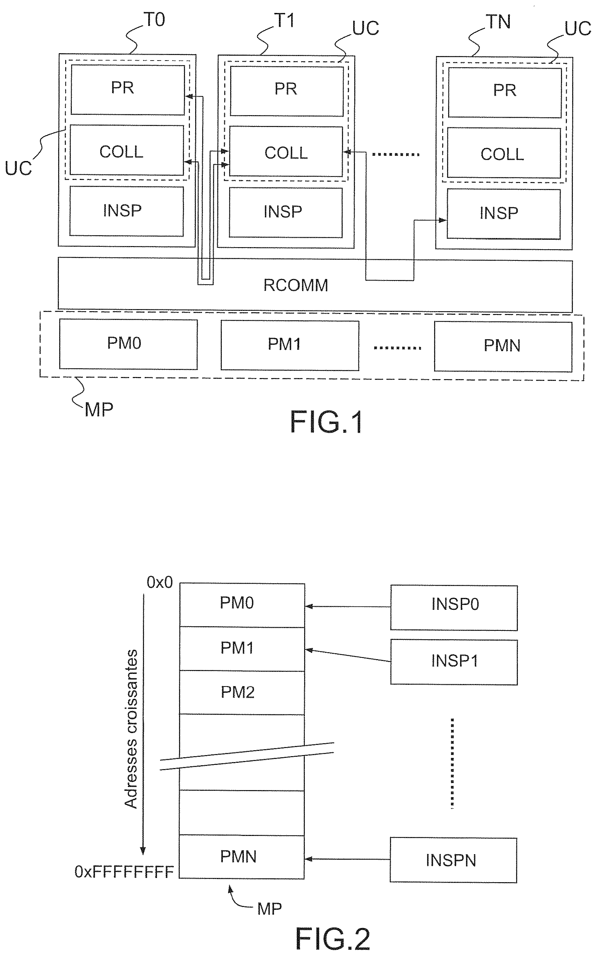

La figure 1 illustre l'architecture d'un système de calcul distribué selon un mode de réalisation de l'invention. Cette architecture comprend une pluralité de « tuiles » ou « noeuds » T0, T1, ..., TN (homogènes ou hétérogènes), comprenant chacune au moins une unité de calcul UC. L'architecture comprend également au moins un module matériel de détection des conflits d'accès (appelé aussi « inspecteur ») INSP contenant la logique nécessaire à la réalisation d'une détection de conflits entre transactions initiées par les unités de calcul. Dans le cas de la figure 1 chaque tuile comprend exactement un inspecteur. Le système comprend également une mémoire partagée MP constituée de (N +1) plages de mémoire PM0, PM1, ..., PMN, auxquelles toutes les unités de calcul peuvent accéder en écriture et/ou en lecture, ainsi qu'un réseau de communication RCOMM, dédié ou hiérarchique, assurant l'interconnexion des tuiles entre elles et avec les plages de mémoire. Le réseau RCOMM peut être un réseau sur puce dans le cas d'une réalisation intégrée du système.

Comme illustré sur la figure 2, chaque plage de mémoire comprend un ensemble de locations de mémoire présentant des adresses consécutives. Chaque adresse de la mémoire partagée est présente dans une plage mémoire. Dans un mode de réalisation optimal, chaque adresse de la mémoire partagée est présente dans une et une seule plage mémoire (cas considéré ici). Chaque dite plage de mémoire est associée à un et un seul module de détection des conflits d'accès ; ainsi, le module INSPi détecte les conflits qui se produisent lorsque plusieurs unités de calcul cherchent à accéder simultanément à une même adresse mémoire de la plage PMi, avec i=0 - N.

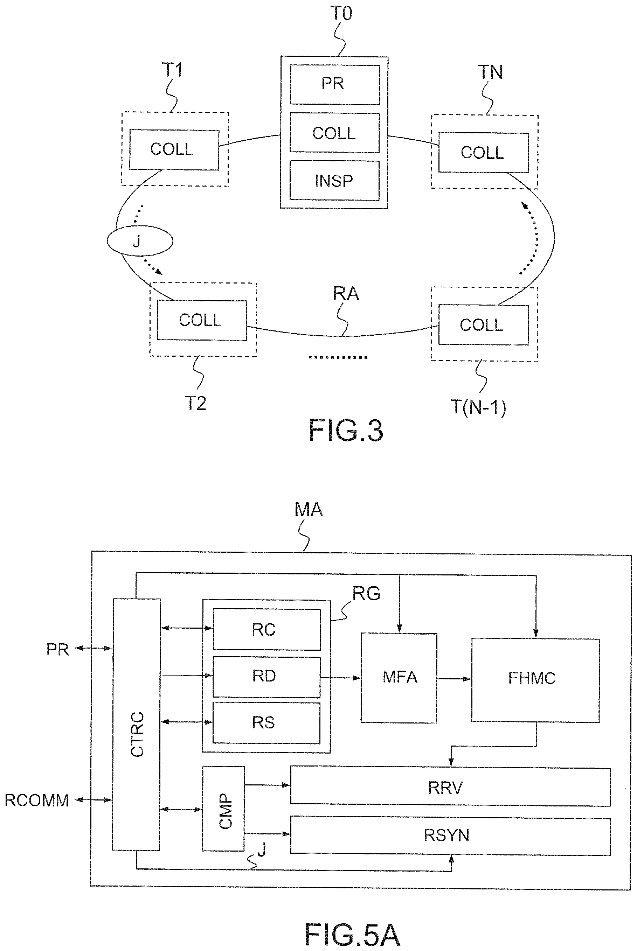

Chaque unité de calcul UC comprend un processeur (ou coeur de processeur, mais dans la suite on parlera simplement de « processeur ») PR, qui effectue les opérations de calcul et traitement des données et qui est effectivement à l'origine des transactions, et un module d'acquisition (appelé aussi « collecteur ») COLL qui sert d'interface entre le processeur et les modules de détection des conflits d'accès aux plages de la mémoire partagée. Chaque module d'acquisition reçoit des requêtes du processeur associé via une interface de programmation composée de registres dédiés (RC, RD, RS sur la figure 5A) identifiés par des adresses mémoires spécifiques. En fonction du type de requête, le module d'acquisition peut se synchroniser avec les autres modules d'acquisition et/ou initier une détection de conflits impliquant un ou plusieurs modules de détection des conflits d'accès. Ces deux étapes forment un protocole en deux phases qui permet de réaliser une transaction mémoire.

Sur la figure 1, des flèches représentent symboliquement les échanges de messages (qui seront détaillées plus loin) entre les processeurs et les modules d'acquisition, entre modules d'acquisition, et entre modules d'acquisition COLL et modules de détection des conflits INSP. Tous ces échanges ont lieu au moyen du réseau RCOMM.

Plusieurs variantes de l'architecture de la figure 1 peuvent être envisagées, sans sortir du cadre de la présente invention. A titre d'exemples non limitatifs :
- Les plages de mémoire peuvent être physiquement intégrées aux tuiles ou aux noeuds ; de préférence, une même tuile ou noeud contiendra le module de détection des conflits correspondant aux plages mémoires intégrées au noeud.
- Le nombre de plages de mémoire, et donc de modules de détection des conflits, peut être différent du nombre d'unité de calcul mais l'ensemble des plages de mémoire PMi sont attribuées à des modules de détection. Un module de détection des conflits unique peut gérer toute la mémoire partagée, mais ce mode de réalisation n'est pas optimal, en particulier pour un grand nombre de processeurs.
- Les modules d'acquisition COLL peuvent être absents, auquel cas leurs fonctionnalités peuvent être mises en oeuvre, de manière logicielle, par les processeurs correspondants (cela n'est pas nécessaire dans le cas d'un module de détection des conflits unique).
- Le réseau de communication unique RCOMM peut être remplacé par une pluralité de réseaux dédiés aux différents types de messages échangés. Dans une autre implémentation, une solution logicielle utilisant une mémoire partagée peut également être utilisée à cette fin. Par exemple les messages peuvent être des écritures et lectures sur des adresses mémoires non cachées et visibles par tous les noeuds dont l'intégrité est garantie par des mécanismes d'accès atomiques.

La synchronisation entre les modules d'acquisition est nécessaire au bon fonctionnement de la détection de conflits. En effet, les caractéristiques des mémoires transactionnelles non-spéculatives imposent que les modules de détection des conflits soient acquis de manière atomique pour garantir la cohérence du système transactionnel. En d'autres termes, un module COLL peut « acquérir » un module INSP afin de vérifier si une transaction peut être menée à bien seulement si ce dernier n'est pas déjà « réservé » pour la vérification d'une autre transaction. Selon un mode de réalisation particulier de l'invention, cette synchronisation repose sur un jeton unique et exclusif J qui circule entre les modules d'acquisition sur un réseau RA présentant une topologie logique en anneau, comme l'illustre la figure 3. Le jeton J contient l'état de réservation de tous les modules INSP. Une implémentation possible consiste en un vecteur de bit, chaque bit représentant la réservation ou non d'un module INSP. Le réseau RA peut correspondre à une utilisation particulière du réseau de communication unique RCOMM, ou avoir une existence physique indépendante. D'autres modes de réalisation sont envisageables ; en fait, tout mécanisme atomique permettant d'acquérir un droit exclusif peut être utilisé. Par exemple les synchronisations peuvent être des écritures et lectures sur des adresses mémoires non cachées et visibles par tous les noeuds dont l'intégrité est garantie par des mécanismes d'accès atomiques.

Pour qu'une transaction mémoire puisse être exécutée par un processeur PR, ce dernier doit d'abord initier une requête de début de transaction auprès de son module d'acquisition COLL et lui envoyer les adresses mémoire des données qui seront utilisées par la transaction. Dans la première phase du protocole de détection de conflits, ces adresses serviront à identifier les modules INSP nécessaires à la détection de conflits d'accès. Chacun de ces modules est identifié ou non en fonction des plages d'adresses mémoire qu'il gère et des adresses des données de la transaction. Plus précisément, un module INSP est identifié dès lors qu'au moins une des données impliquées dans la transaction est stockée dans la ou les plages de mémoire qui lui sont associés. A l'issue de cette identification, le module d'acquisition COLL attend de recevoir le jeton pour vérifier la disponibilité des modules de détection de conflits INSP précédemment identifiés. Si ceux-ci sont disponibles, ils sont réservés ou « acquis » - ce qui, dans le mode de réalisation considéré ici, consiste à mettre à jour le jeton. Le jeton est ensuite libéré, et la seconde phase peut commencer. Sinon, le jeton est libéré et le module d'acquisition attend que celui-ci lui revienne pour refaire une tentative d'acquisition des modules de détection des conflits d'accès. Le module d'acquisition peut également informer le processeur de l'indisponibilité des modules de détection des conflits d'accès sélectionnés ; dans ce cas, la transaction est mise en attente.

La seconde phase du protocole consiste en la détection de conflits proprement dite. Pour cela, le module d'acquisition COLL envoie des requêtes spécifiques aux modules INSP identifiés pour procéder à la réservation des données utilisées par la transaction. Ces requêtes ont pour but de vérifier la présence ou non des données utilisées par la transaction dans des structures de données stockées par les modules INSP correspondants. Si une donnée est présente dans une telle structure de données, cela signifie qu'elle est déjà utilisée par une autre transaction, ce qui correspond à un conflit.

A la fin de la seconde phase du protocole, en fonction de l'absence ou de la présence de conflits, le processeur est respectivement autorisé ou non à exécuter la transaction et l'état global des réservations de données est mis à jour dans les modules INSP sur ordre du module d'acquisition COLL. Les modules INSP sont libérés par le module d'acquisition COLL lorsque le jeton lui revient. A la fin de la transaction, un protocole tout à fait semblable est réutilisé pour mettre à jour l'état global des réservations de données, mais cette fois-ci en libérant les données utilisées par la transaction. Dès lors, à cette étape le protocole n'inclut pas de détection de conflits.

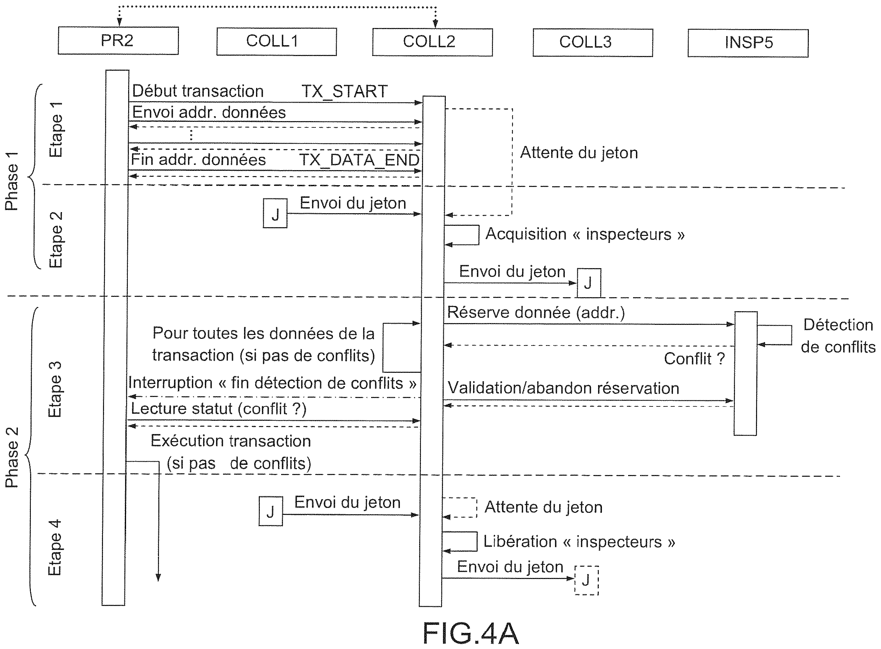

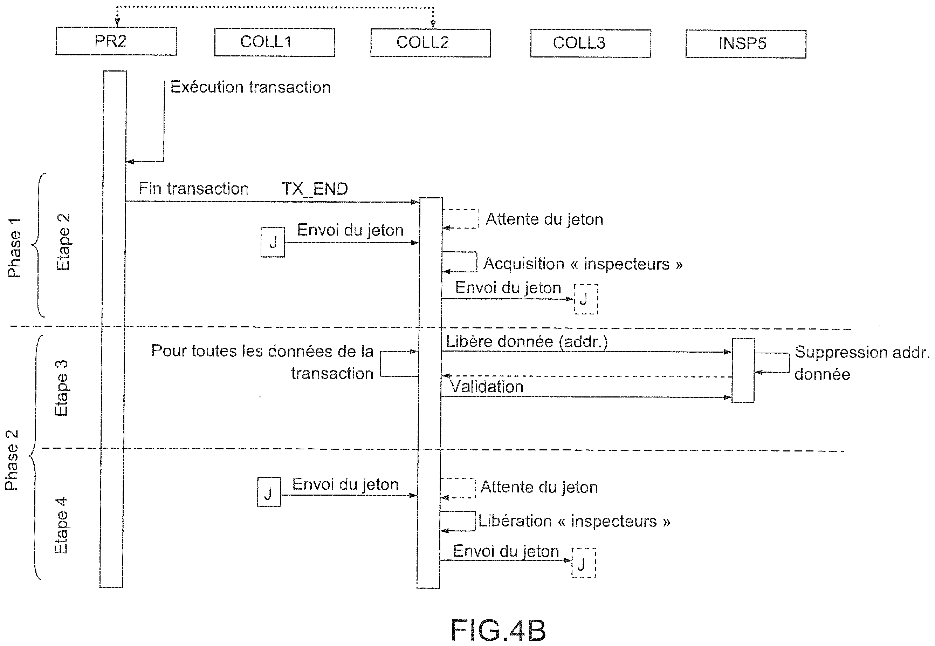

Les figures 4A et 4B illustrent en détail les différentes étapes d'un mode de réalisation particulier de ce protocole. La figure 4A concerne plus précisément la phase de réservation des modules INSP et des droits d'accès aux données de la transaction et la phase de détection des conflits (« préambule » de la transaction). La figure 4B illustre la phase de libération des modules INSP et des droits d'accès aux données de la transaction (« épilogue » de la transaction). Ces figures se rapportent au cas où un processeur PR2, assisté du module d'acquisition associé COLL2, initie une transaction impliquant des données stockées dans une plage PM5 de la mémoire partagée, supervisée par un module de détection des conflits INSP5. Les modules d'acquisition COLL1 et COLL3, qui précèdent et suivent COLL2 dans le réseau en anneau RA, interviennent uniquement pour le passage du jeton J. Dans la suite et sur ces figures, dans un but de concision, on parlera de « collecteurs » et « inspecteurs » pour indiquer les modules COLL et INSP, respectivement.

Comme expliqué plus haut, le préambule de la transaction (figure 4A) comporte une première phase (Phase 1) d'identification (étape 1) et de réservation ou « acquisition » (étape 2) des inspecteurs, suivie d'une deuxième phase (Phase 2) de détection des conflits (étape 3) et de libération des inspecteurs (étape 4).

Lors de l'étape 1, le processeur PR2 envoie au collecteur COLL2 un message « TX_START » indicatif du début d'une transaction, suivie d'une série de messages contenant les adresses des données impliquées dans la transaction. Au fur et à mesure qu'il reçoit les adresses, le collecteur COLL2 envoie des accusés de réception au processeur (flèches en pointillé sur la figure) et détermine les plages de mémoire, et donc les modules inspecteurs, correspondants. Un message « TX_DATA_END » indique la fin de l'envoi, et de l'étape 1.

L'étape 2 commence lorsque le jeton est reçu par le module COLL2 depuis le module COLL1. Elle consiste en l'acquisition (ou « réservation ») des modules inspecteurs identifiés lors de l'étape 1 (en l'espèce, le seul module INSP5). Dans le mode de réalisation considéré ici, le jeton J est un message qui circule sur le réseau en anneau RA et qui contient une liste des modules inspecteurs qui ont été acquis par les différents modules collecteurs. Lorsqu'il reçoit le jeton J, le module COLL2 vérifie donc si le module inspecteur INSP5, qu'il entend acquérir, est marqué comme réservé dans cette liste. Dans l'affirmative, il libère le jeton en le transmettant au module COLL3 et se remet en attente de le recevoir à nouveau ; autrement, il marque INSP5 comme réservé dans la liste (ce qui constitue l'acquisition de ce module inspecteur), transmet au module COLL3 le jeton mis à jour et procède à l'étape 3.

Au début de l'étape 3, le module collecteur COLL2 transmet aux modules inspecteurs sélectionnés et acquis (ici, le seul module INSP5) des messages d'un premier type, contenant les adresses des données impliquées par la transaction et correspondant à chaque dit module inspecteur. Cet envoi peut se faire adresse par adresse ou par paquets. Les modules inspecteurs comprennent une mémoire stockant une structure de données probabiliste (par exemple un filtre de Bloom à comptage, comme cela sera expliqué en détail plus loin) indicative des données déjà impliquées dans une transaction. Chaque module INSP détecte, à l'aide de cette structure de données, des conflits d'accès éventuels et envoie en réponse des messages d'un deuxième type indiquant la présence ou l'absence de conflits (l'opération de détection des conflits sera décrite plus loin).Un message dit d'un quatrième type, de validation ou abandon, est également envoyé aux modules inspecteurs. Plus particulièrement, deux cas peuvent se présenter :
(1) Lorsque COLL2 a reçu l'ensemble des confirmations indiquant l'absence de conflit pour chaque adresse impliquée dans la transaction, ce dernier envoie à chaque inspecteur INSP impliqué dans la transaction (ici INSP5) un message du quatrième type indiquant une validation de la transaction. La structure de données probabiliste stockée dans chaque module inspecteur est alors mise à jour pour tenir compte de la réservation des données impliquées dans la transaction.
(2) A l'inverse, si au moins un inspecteur détecte un conflit, un message du quatrième type indiquant un abandon est envoyé par COLL2 à chaque inspecteur (ici INSP5). Ainsi la structure de données probabiliste de chaque inspecteur concerné par la transaction reste inchangée.

Quel que soit le cas rencontré les inspecteurs renvoient un message d'acquittement du message de validation ou d'abandon de la transaction. Dès qu'un conflit est détecté, ou lorsque qu'aucun conflit n'est détecté, le module COLL2 envoie également un message au processeur PR2. Ce dernier va ensuite lire un registre de statut pour savoir s'il existe ou non un conflit pour la transaction. En l'absence de conflit, la transaction peut s'exécuter. Ceci termine l'étape 3.

Au début de l'étape 4, le module collecteur COLL2 peut procéder à la libération des modules inspecteurs qu'il a acquis préalablement (INSP5 dans le cas présent), et dont il n'a plus besoin pour le moment. Ceci a lieu pendant que le processeur PR2 exécute la transaction. Pour procéder à la libération des modules inspecteurs, il se met en attente du jeton J. A sa réception, le module collecteur COLL2 met à jour le jeton J en effaçant l'inspecteur INSP5 de la liste des modules inspecteurs acquis, et retransmet le jeton J au collecteur suivant. L'avantage de disposer d'un module collecteur COLL2 indépendant du processeur est que cette opération de libération n'interfère pas avec l'exécution de la transaction.

L'épilogue (figure 4B) débute après la fin de la transaction, quand le processeur PR2 envoie un signal « TX_END » au module collecteur COLL2. Ce dernier se met donc en attente du jeton et, lorsqu'il le reçoit, procède à l'acquisition des modules inspecteurs comme cela a été expliqué plus haut en référence à l'étape 2 de la phase 1 du préambule. Avantageusement, le module collecteur garde en mémoire les adresses des données de la transaction, ce qui évite au processeur d'avoir à les retransmettre (cf. étape 1 de la phase 1 du préambule). Une telle retransmission peut néanmoins s'avérer nécessaire en cas de saturation de cette mémoire. Le processeur est informé de cette éventualité par les accusés de réception reçus au cours de l'étape 1 de la phase 1 du préambule.

Lors de la phase 2/étape 3 de l'épilogue, le module collecteur COLL2 transmet au module inspecteur INSP5 des messages d'un troisième type, contenant les adresses des données qui étaient impliquées par la transaction qui vient de se terminer. Comme pour la réservation, cet envoi peut se faire adresse par adresse ou par paquets. Les modules inspecteurs procèdent à la libération des droits d'accès sur les adresses des données d'une manière qui sera détaillée plus loin, et qui est symétrique à leur réservation. Un message du quatrième type, de validation, envoyé du collecteur COLL2 à l'inspecteur INSP5, achève la phase de libération des données. L'épilogue de la transaction s'achève avec une quatrième étape de libération des modules inspecteurs (ici INSP5), identique à l'étape correspondante du préambule, à ceci près que les modules inspecteurs marqués comme réservés et concernés par la transaction qui se termine sont marqués comme étant libres.

La figure 5A illustre un schéma fonctionnel d'un module d'acquisition (ou « collecteur ») COLL pouvant être utilisé pour la mise en oeuvre du protocole décrit plus haut en référence aux figures 4A et 4B. Ce module comprend :
- Un contrôleur CTRC qui gère l'ensemble des opérations effectuées par le collecteur, à savoir :
   (1) l'échange de messages avec le processeur PR (par l'intermédiaire d'une interface dédiée) et avec les modules d'acquisition (par l'intermédiaire du réseau RCOMM), et
   (2) la synchronisation avec les autres collecteurs (également par l'intermédiaire du réseau RCOMM, qui peut inclure un réseau dédié en anneau). Ce contrôleur peut comprendre, ou être constitué de, une machine d'état et, le cas échéant, un ou plusieurs circuits d'interface.
- Un ensemble RG de registres généraux, comprenant en particulier un registre de commandes RC, un registre de données RD et un registre de statut RS. Ces registres sont accessibles depuis le processeur associé (via le contrôleur CTRC) et permettent l'échange de données entre ce dernier et le module collecteur. Ils sont associés à des adresses mémoires spécifiques et constituent ainsi une interface de programmation pour le processeur PR. Plus précisément, le processeur écrit dans le registre RC les commandes « TX_START », « TX_DATA_END » et « TX_END » mentionnée plus haut, qui contrôlent le fonctionnement du contrôleur CTRC. Il écrit dans le registre RD les adresses des données à réserver (et, le cas échéant, à libérer) et lit dans le registre RS la présence ou absence d'un conflit d'accès (ou d'une erreur, ou d'un débordement de la structure de données).
- Une mémoire de stockage temporaire MFA, réalisant une file d'attente pour les adresses envoyées par le processeur. Cette mémoire permet de limiter l'envoi répété des mêmes adresses au collecteur au cours des différentes étapes d'une transaction (prologue et épilogue). En particulier, la présence de cette mémoire permet d'éviter la retransmission des adresses des données à libérer lors de l'épilogue de la transaction. Une telle retransmission reste nécessaire en cas de saturation de la mémoire.
- Un module FHMC réalisant, de façon matérielle, une fonction de hachage, qui permet de sélectionner un module inspecteur unique à partir d'une valeur d'adresse envoyée depuis le processeur. Le résultat du hachage, quant à lui, permet de mettre à un le bit correspondant à l'inspecteur sélectionné dans le registre de réservation (voir ci-après). Chaque module FHMC réalise la même fonction de hachage, ainsi chaque adresse est associée à un même module inspecteur quel que soit le collecteur concerné.
- Un registre de réservation RRV et un registre de synchronisation RSYN, ainsi qu'un comparateur bit-à-bit CMP entre ces registres pour vérifier la disponibilité des modules « inspecteurs » requis pour une transaction. Chacun des registres RRV et RSYN comprend une cellule de mémoire à un bit pour chaque module inspecteur du système.

Comme mentionné plus haut, au début du prologue d'une transaction le processeur écrit dans le registre de commande RC du module collecteur qui lui est associé une commande « TX_START » afin de lui notifier qu'une nouvelle transaction est initiée. Ensuite, le processeur envoie chaque adresse de donnée en l'écrivant dans le registre de données RD. Chaque écriture sur ce registre engendre une sauvegarde de la valeur de l'adresse de la donnée dans la file d'attente et de stockage MFA et est également transmise au module de hachage FHMC. Le module FHMC retourne une valeur correspondant à un indice dans le registre de réservation RRV. Cet indice représente le module inspecteur en charge de la plage d'adresses dans laquelle se trouve l'adresse de la donnée précédemment transmise au collecteur. La fin de la séquence d'envoi des adresses des données au collecteur est matérialisée par l'écriture, dans le registre de commande RC par le processeur PR, d'une commande « TX_DATA_END ». Au terme de cet envoi, le registre de réservation RRV représente l'ensemble des modules inspecteurs nécessaires à la détection de conflits pour la nouvelle transaction. Chaque bit de RRV à '1' représente un inspecteur à acquérir.

Ensuite, le module collecteur COLL reçoit, par l'intermédiaire du contrôleur CTRC, le jeton J qui tourne entre les différents modules collecteurs et qui contient une liste des modules inspecteurs déjà acquis (ce qui évite d'avoir à accéder à un élément de mémorisation centralisé). Dans ce mode de réalisation, le jeton J est composé d'un mot de n bits. Chaque bit de J représente ainsi la réservation, ou non, d'un inspecteur INSP. Le jeton J reçu par le module COLL est temporairement stocké dans le registre de synchronisation RSYN.

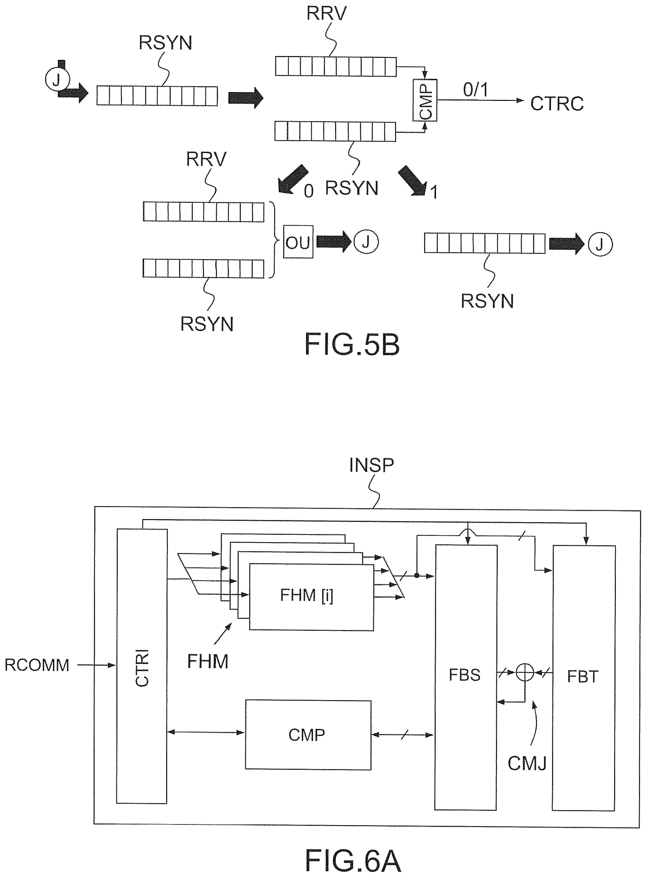

La vérification de la disponibilité des modules inspecteurs en attente d'acquisition est réalisée en effectuant, au moyen du comparateur CMP, une comparaison bit-à-bit entre le registre de réservation RRV et le registre de synchronisation RSYN. Le résultat - par exemple une valeur « 0 » si tous les modules inspecteurs à réserver sont disponibles, une valeur « 1 » si au moins un ne l'est pas - est transmis au contrôleur CTRC. Si aucun des modules inspecteurs en attente d'acquisition n'est déjà utilisé par une autre transaction (sortie « 0 » du comparateur), alors le registre de synchronisation (et donc la valeur du jeton J) est mis à jour pour refléter l'acquisition des modules inspecteur par le collecteur. Cela peut se faire via une opération de « OU » bit à bit des registres RRV et RSYNC par exemple. Par contre, si un module inspecteur est déjà utilisé par une autre transaction (et donc le bit correspondant est à « 1 » dans le registre de synchronisation, ce qui se traduit par une sortie « 1 » du comparateur), alors la valeur du jeton n'est pas mise à jour et le collecteur transfère celui-ci au collecteur suivant en attendant qu'il lui revienne au prochain tour. La figure 5B illustre ce protocole de synchronisation entre collecteurs.

S'il reçoit une valeur « 0 » du comparateur, le contrôleur CTRC peut déclencher la phase de réservation des données, qui consiste à envoyer l'adresse de chacune d'entre elles aux modules inspecteurs correspondants afin de rechercher la présence d'un conflit éventuel avec une autre transaction. Les données (plus exactement, leurs adresses) temporairement stockées dans la mémoire MFA sont réutilisées si cette dernière a une capacité suffisante ; sinon le processeur doit renvoyer les données de la transaction de la même manière qu'à la première étape.

La réservation des données est réalisée par un protocole d'échange spécifique entre le collecteur et les inspecteurs, mis en oeuvre par l'intermédiaire du contrôleur CTRC. Chaque requête émise par le collecteur contient l'adresse mémoire de la donnée. La réponse de l'inspecteur contient deux drapeaux : un acquittement et la présence d'un conflit ou d'un débordement. La première requête émise vers un inspecteur contient également une commande permettant de distinguer les requêtes d'acquisition et de libération. L'acquittement, reçu de l'inspecteur en réponse à l'envoi de chaque adresse, permet de s'assurer que la recherche de conflits a bien été effectuée. Le registre de statut RS est mis à jour à chaque réponse d'un inspecteur en fonction de la présence d'une erreur, d'un conflit, d'un débordement ou toute combinaison de ces trois évènements. Ce registre est lu par le processeur, qui est ainsi informé de la présence éventuelle de conflit d'accès rendant impossible la transaction. A l'issue de l'envoi de toutes les données de la demande de réservation, le collecteur envoie à chaque inspecteur un dernier message contenant une commande de validation (en l'absence de conflits d'accès) ou d'abandon (en présence d'au moins un tel conflit) codée sur deux bits.

A la fin du prologue, après la réception les modules inspecteurs qui ont été utilisés sont libérés de la même manière qu'ils ont été acquis. Pour cela, lorsque le jeton passe par le collecteur, une opération de « ET » bit à bit est utilisée (à l'inverse du « OU » bit à bit pour l'acquisition) entre le registre de réservation (inchangé) complémenté à 1 (inversion de tous les bits) et le registre de synchronisation. Ainsi, chaque bit correspondant à un inspecteur identifié par le registre de réservation est mis à « 0 ».

L'épilogue, exécuté après la fin de la transaction, est fortement similaire au prologue à la différence qu'il n'y a pas de détection de conflits.

La figure 6A illustre un schéma fonctionnel d'un module de détection des conflits d'accès (ou « inspecteur ») INSP pouvant être utilisé pour la mise en oeuvre du protocole décrit plus haut en référence aux figures 4A et 4B. Ce module comprend :
- Un contrôleur CTRI contenant une machine d'états. Ce contrôleur fait l'interface entre le module et le réseau d'interconnexion RCOMM et gère les différentes étapes de la détection de conflits, qui seront détaillées ci-après.
- Un module FHM contenant un ensemble de modules de fonctions de hachage matérielles notées FHM[i]. Chaque module FHM[i] réalise de façon matérielle, une fonction de hachage sur chaque adresse indicative d'une donnée à réserver. Ainsi, chaque adresse est convertie par le module FHM en un ensemble de « mots » binaires plus courts qui serviront à adresser les filtres de bloom FBT et FBS. La taille des sorties du bloc FHM est ainsi dépendante de la taille des filtres de bloom.
- Un filtre de Bloom dit « temporaire » FBT qui contient n éléments de stockage FBT[0] à FBT[n-1]. Chaque élément de stockage FBT[i] contient une valeur booléenne 1 si elle a été adressée par le FHM lors de la requête d'accès correspondant à une transaction à exécuter, et prend la valeur 0 dans le cas contraire.
- Un filtre de Bloom à comptage, dit « de sauvegarde » FBS, ayant un nombre n d'éléments de stockage égal à celui du filtre de Bloom temporaire FBT. Les éléments de stockage sont notés FBS[0] à FBS[n-1]. Ils seront mis à jour à partir du FBT en cas de succès à l'issue de l'acquisition de toutes les adresses impliquées dans la transaction. Chaque élément de stockage FBS[i] contient le nombre de fois que FBT[i] a valu 1 pour toutes les transactions préalablement autorisées à s'exécuter. Ce module conserve cette information pour l'ensemble des transactions en cours.
- Un comparateur CMP prend en entrée les éléments de stockage de FBS sélectionnés par le FHM pour chaque adresse indicative d'une donnée à réserver. Il vérifie qu'au moins un des éléments de stockage vaut 0. Dans le cas positif, c'est à dire s'il existe au moins un 0, cela signifie que l'adresse est disponible. Dans le cas négatif, c'est à dire s'il n'existe pas d'élément de stockage à 0, cela signifie que l'adresse ne peut pas être réservée car elle est déjà probablement réservée (seulement « probablement », car il y a un risque de faux positif). La transaction requérante doit alors être annulée. Dans tous les cas l'information correspondante est retournée au contrôleur CTRI.

Pour mémoire, un filtre de Bloom est une structure de données probabiliste compacte bien connue dans l'état de la technique, utilisée pour réaliser des tests de présence d'un élément dans un ensemble. Un filtre de Bloom permet de déterminer avec certitude l'absence de l'élément dans l'ensemble (il ne peut pas y avoir de faux négatifs), et de manière probabiliste la présence dudit élément dans l'ensemble (on admet un taux non nul de faux positifs). La taille d'un filtre de Bloom ne dépend pas du nombre d'éléments contenus dans l'ensemble, ce qui permet une grande compacité ; néanmoins, un compromis doit être trouvé entre la taille du filtre et le taux de faux positifs que l'on peut tolérer. Dans le cas du filtre de Bloom dit « ordinaire » FBT il s'agit d'éléments de stockage binaires, tandis que dans le cas du filtre de Bloom « à comptage » FBS il s'agit de compteurs capables de stocker des valeurs entières (rien n'empêche d'avoir deux filtres de Bloom à comptage dont l'un est utilisé comme un filtre ordinaire).

Pour la mise en oeuvre de l'invention on privilégie des filtres de Bloom « matériels », c'est-à-dire réalisés au moyen de circuits logiques dédiés.

Le contrôleur CTRI est en charge du pilotage des différentes étapes de la détection de conflits décrites ci-après et répétées pour chaque adresse impliquée dans la transaction en cours lors de la demande de réservation :
- Etape 1 : une adresse mémoire impliquée dans la transaction est présentée au contrôleur CTRI via le réseau de communication RCOMM suite à un envoi par un collecteur.
- Etape 2 : la valeur de l'adresse est propagée vers le module FHM. Ce module retourne un ensemble d'indices qui identifient chacun un élément de stockage dans les filtres de Bloom FBT et FBS.
- Etape 3 : les éléments de stockage de FBT identifiés par ces indices prennent une valeur « 1 », les autres conservent leurs valeurs.
- Etape 4 : les contenus des éléments de stockage du filtre de Bloom de stockage FBS identifiés par le module FHM sont transmis au comparateur CMP.
- Etape 5 : le comparateur CMP utilise les valeurs envoyées par le filtre de Bloom de stockage FBS pour rechercher la présence d'un conflit. Un conflit est identifié si aucune des valeurs reçues ne vaut 0. Qu'il y ait un conflit ou non, l'information correspondante est retournée au contrôleur CTRI.
- Etape 6 : la présence ou l'absence d'un conflit et/ou débordement est notifiée par le contrôleur CTRI au module collecteur COLL.
- Etape 7 : Lorsque toutes les adresses impliquées dans la transaction en cours n'ont pas aboutis sur l'identification d'un conflit, Le module FBS est mis à jour à partir du module FBT. Le contenu du module FBS devient la somme du contenu du module FBT avec lui-même. En cas de débordement de la valeur accumulée sur FBS, cet évènement est envoyé au CTRI qui lui-même le notifie au COLL pour annuler la transaction. Le contenu du FBS est alors maintenu à son ancienne valeur.

Lorsque toutes les adresses de la demande de réservation ont été traitées et qu'aucun conflit et débordement n'a été détecté, la transaction requérante est autorisée à s'exécuter, comme cela a été expliqué plus haut.

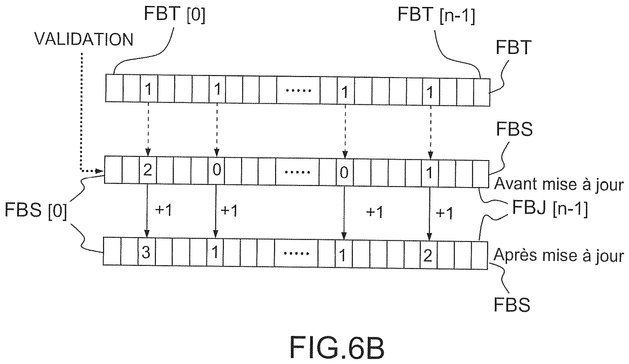

Si le contrôleur CTRI reçoit un message de validation de la du module COLL via le réseau RCOMM, un circuit logique CMJ (un additionneur) met à jour l'état des réservations en incrémentant les compteurs du filtre de Bloom de sauvegarde dont les indices correspondent à un bit à '1' dans le filtre de Bloom temporaire, comme illustré figure 6B. A l'inverse, en cas d'abandon, le filtre de Bloom de sauvegarde reste inchangé. Dans les deux cas, le filtre de Bloom temporaire est remis à zéro.

La libération des données à la fin de l'épilogue de la transaction s'effectue de manière semblable mais sans détection de conflits, les compteurs du filtre de Bloom de sauvegarde étant décrémentés au lieu d'être incrémentés.

Les propriétés des filtres de Bloom impliquent que tous les conflits d'accès seront détectés (absence de faux négatifs), mais que certaines transactions seront empêchées même en l'absence de conflits d'accès réels (possibilité d'avoir des faux positifs).

D'une manière connue en soi, les différents modules matériels du système pourront être réalisés à partir de circuits logiques dédiés et/ou de composants programmables tels que des FPGA.

L'invention a été décrite en référence à un mode de réalisation particulier. Cependant, de nombreuses variantes peuvent être envisagées. La liste qui suit n'est pas limitative.

De préférence, un système de calcul distribué selon l'invention comprend une pluralité de modules de détection des conflits, associés à des plages respectives de la mémoire partagée - comme c'est le cas dans le mode de réalisation décrit en détail ci-dessus. Cela permet en effet à des transactions utilisant des données situées dans des plages d'adresses respectives disjointes de détecter leurs conflits (ou réserver ou libérer leurs données) de façon parallèle. On évite ainsi une sérialisation des détections de conflits qui serait imposée par l'utilisation d'un module de détection des conflits unique et qui pourrait constituer un goulot d'étranglement pour le système. Toutefois, comme cela a été évoqué plus haut, un système de calcul selon un premier mode de réalisation alternatif de l'invention peut ne comprendre qu'un seul module de détection des conflits d'accès (inspecteur) qui, dès lors, gère l'ensemble de l'espace mémoire adressable par les différents processeurs. Dans ce cas, les modules d'acquisition n'ont plus besoin de registres de réservation. Une forme de synchronisation doit cependant être maintenue pour éviter que deux collecteurs accèdent simultanément à ce module inspecteur unique ; cette synchronisation peut, par exemple, être assurée par un jeton binaire. Un tel mode de réalisation peut être intéressant si le nombre d'unités de calculs est restreint.

Selon un deuxième mode de réalisation alternatif, les modules d'acquisition peuvent ne pas présenter de mémoire de stockage temporaire MFA. Cependant, en cas d'absence de ce sous-module, le processeur doit renvoyer les adresses des données de la transaction à chaque étape car celles-ci ne sont plus stockées dans le module d'acquisition.

Selon un troisième mode de réalisation alternatif, l'étape de libération des modules de détection des conflits d'accès avant la fin du prologue et de l'épilogue peut être omise. Cette variante est particulièrement pertinente dans le cas d'une architecture multiprocesseur de grande taille pour réduire le temps d'attente.

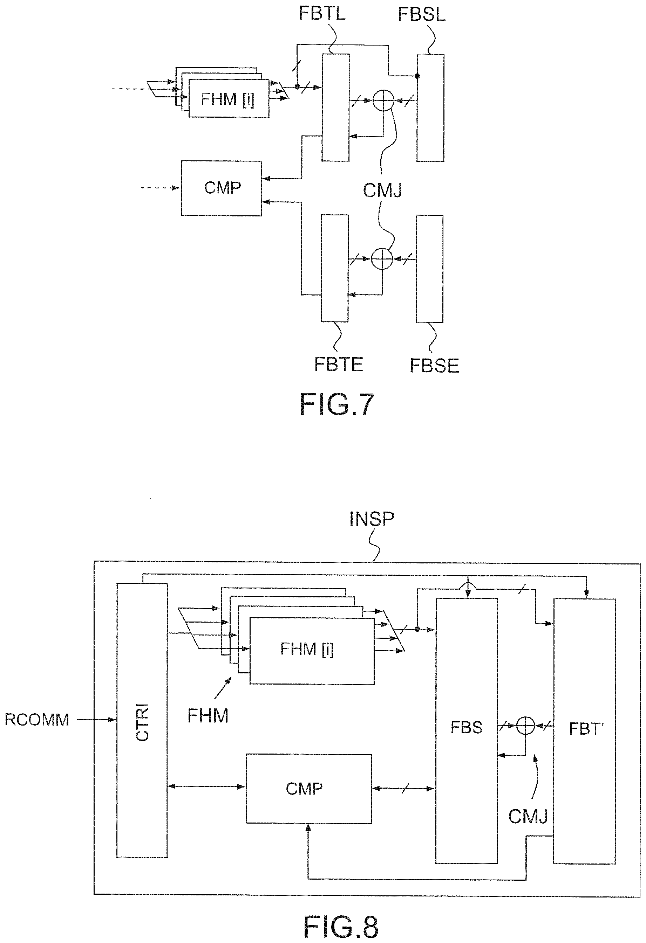

Selon un quatrième mode de réalisation alternatif, chaque module de détection des conflits peut contenir deux paires de filtre de Bloom : une paire FBTL, FBSL pour les données lues et une FBTE, FBSE pour les données écrites (voir la figure 7). Une information dans les messages de réservation transmis du processeur au module d'acquisition, et de ce dernier au module de détection des conflits, permet de distinguer les accès en lecture et en écriture. La détection de conflits est alors plus précise. Un conflit doit alors être détecté seulement si au moins une écriture lors d'une transaction a lieu à une adresse utilisée en lecture par d'autres transactions. Pour la réservation de l'accès à une donnée en écriture, il y a conflit dès lors que l'adresse de la donnée est présente dans le filtre FBSE ou FBSL. Pour la réservation de l'accès à une donnée en lecture, il y a conflit uniquement lorsque l'adresse de la donnée est présente dans le filtre FBSE.

Selon un cinquième mode de réalisation alternatif, illustré sur la figure 8, aussi bien le filtre de Bloom temporaire FBT' que le filtre de Bloom de sauvegarde FBS peuvent être du type à comptage. Les compteurs du filtre de Bloom temporaire FBT' sont incrémentés au fur et à mesure que les messages du premier type sont reçus, ainsi à la fin de l'étape de réservation ce filtre contient un vecteur de valeurs entières constituant une signature numérique de la transaction. Lors de la réception d'un message de validation de la transaction (quatrième type), ces valeurs entières sont ajoutées aux compteurs correspondants du filtre de Bloom de sauvegarde FBS. Lors de la phase de libération des données, les messages de libération (troisième type) décrémentent directement les compteurs du filtre de Bloom de sauvegarde FBS, sans passer par le filtre de Bloom temporaire FBT'. Il n'y a donc pas besoin d'un message de confirmation (quatrième type) lors de ladite phase de libération. Ainsi, dans ce mode de réalisation, une réduction du nombre de messages échangées et obtenue au prix d'une légère augmentation de la complexité matérielle des modules de détection des conflits d'accès.

Ces différents modes de réalisation alternatifs peuvent être combinés entre eux. En particulier, dans le cinquième mode de réalisation alternatif, chaque filtre de Bloom peut être remplacé par une paire de filtres de Bloom dédiés aux accès en lecture et en écriture (cf. le quatrième mode de réalisation alternatif et la figure 7).

Par ailleurs, les filtres de Bloom - binaires ou à comptage - ne sont pas les seules structures de données probabilistes pouvant être utilisées dans le cadre de l'invention. Un autre exemple d'une telle structure de données probabiliste est la « Count-min-sketch ». Comme les filtres de Bloom, elle utilise des fonctions d'hachage ; cependant, son rôle est de compter l'occurrence d'un élément dans un flux, et non l'appartenance d'un élément à un ensemble. Pour appliquer une « Count-min-sketch » à une mémoire transactionnelle, il faut procéder de la manière suivante. Tout d'abord, on considère que la séquence d'adresses issue des accès mémoire d'une transaction constitue un flux. Puis on détermine un conflit entre deux transactions en comparant les occurrences des adresses dans les flux respectifs au moyen d'une « Count-min-sketch ». Cette structure peut être implémentée de manière logicielle ou matérielle.

## Revendications

1. Système de calcul distribué comprenant une pluralité d'unités de calcul (UC) et au moins une mémoire partagée (MP) entre lesdites unités de calcul, comprenant également au moins un module matériel de détection des conflits d'accès (INSP) desdites unités de calcul à ladite mémoire partagée ; **caractérisé en ce que** ledit ou chaque dit module matériel de détection des conflits comprend :
- au moins un premier filtre de Bloom matériel (FBT) pour stocker temporairement une première structure de données probabiliste, indicative d'au moins une adresse de ladite mémoire partagée pour laquelle une requête d'accès a été reçue ;
- au moins un second filtre de Bloom matériel (FBS), du type à comptage, pour stoker une seconde structure de données probabiliste, indicative de la totalité des adresses de ladite mémoire partagée impliquées dans la totalité des transactions déjà en cours ;
- au moins un module de fonction de hachage (FHM) pour adresser lesdits premier et second filtres de Bloom ; et
- un circuit logique (CMP, CTRI) configuré pour :
- recevoir un message indicatif d'une requête d'accès, par une dite unité de calcul, à au moins une adresse de ladite mémoire partagée ; mettre à jour la première structure de données probabiliste stockée dans le premier filtre de Bloom matériel pour qu'elle soit indicative de ladite adresse ; déterminer, à partir des structures de données probabilistes stockées dans lesdits premier et second filtres de Bloom, si ladite adresse est déjà impliquée dans une transaction en cours ; générer et transmettre à ladite unité de calcul un message de présence ou absence de conflits d'accès ; et pour
- recevoir au moins un message indicatif ou confirmatif d'une réservation ou d'une libération d'au moins une dite adresse de ladite mémoire partagée, et mettre à jour ladite seconde structure de données probabiliste stockée dans le second filtre de Bloom matériel pour que les adresses réservées et les adresses libérées soient considérées, respectivement, comme étant/n'étant pas impliquées dans une transaction en cours.

2. Système de calcul distribué selon la revendication 1 dans lequel ledit circuit logique dudit ou de chaque dit module matériel de détection des conflits est configuré pour :
- recevoir au moins un premier type de message indicatif d'une requête d'accès, par une dite unité de calcul, à au moins une adresse de ladite mémoire partagée ;
- déterminer, à partir de ladite structure de données probabiliste, si ladite adresse est déjà impliquée dans une transaction en cours, et transmettre à ladite unité de calcul au moins un deuxième type de message de présence ou absence de conflits d'accès ;
- recevoir au moins un troisième type de message indicatif d'une requête de libération d'une dite adresse de mémoire partagée, qui n'est plus impliquée dans une transaction et mettre à jour ladite structure de données probabiliste en conséquence ; et
- recevoir au moins un quatrième type de message, indicatif d'une validation ou d'un abandon d'au moins une dite requête d'accès ou de libération et, en cas de validation, mettre à jour ladite structure de données probabiliste en conséquence.

3. Système de calcul distribué selon la revendication 2 dans lequel ledit circuit logique est configuré pour générer un message dudit deuxième type par comparaison entre les structures de données probabilistes mémorisées dans ledit premier et ledit deuxième filtre de Bloom matériel, et pour mettre à jour ladite structure de données probabiliste stockée dans ledit deuxième filtre de Bloom matériel à partir de celle stockée temporairement dans ledit premier filtre de Bloom suite à la réception d'un message dudit quatrième type, indicatif d'une validation d'une requête d'accès ou de libération d'une adresse de ladite mémoire partagée.

4. Système de calcul distribué selon la revendication 3 dans lequel ledit premier filtre de Bloom matériel (FBT) est également du type à comptage.

5. Système de calcul distribué selon l'une des revendications 3 ou 4 dans lequel ledit ou chaque dit module matériel de détection des conflits d'accès comprend une première paire de filtres de Bloom (FBTL, FBSL) pour la détection de conflits d'accès en lecture et une deuxième paire de filtres de Bloom (FBTE, FBSE) pour la détection de conflits d'accès en écriture.

6. Système de calcul distribué selon l'une des revendications précédentes comprenant une pluralité de dits modules matériels de détection des conflits d'accès (INSP0 - INSPN), associés chacun à un segment (PM0 - PMN) de ladite mémoire partagée.

7. Système de calcul distribué selon la revendication 6 dans lequel chaque unité de calcul comprend un module initiateur d'accès mémoire (PR) et un module matériel d'acquisition (COLL) desdits modules matériels de détection des conflits d'accès, chaque dit module matériel d'acquisition étant configuré pour réaliser une acquisition exclusive et atomique du ou des modules matériels de détection des conflits d'accès nécessaires à la détection des conflits d'accès pour une transaction.

8. Système de calcul distribué selon la revendication 7 dans lequel ledit circuit logique de chaque dit module matériel d'acquisition est configuré pour :
- recevoir au moins un message indicatif d'une requête d'accès, par ledit module initiateur d'accès mémoire, à une adresse de ladite mémoire partagée ; et identifier, à partir de ce message, le module matériel de détection des conflits d'accès associé à ladite adresse ;
- recevoir et stocker un message indicatif d'un ensemble de modules matériels de détection des conflits d'accès en cours d'utilisation ; puis déterminer, au moyen dudit message stocké, si ledit module matériel de détection identifié est en cours d'utilisation et : s'il ne l'est pas, mettre à jour ledit message indicatif d'un ensemble de modules matériels de détection des conflits d'accès en cours d'utilisation pour indiquer que ledit module matériel de détection des conflits d'accès est désormais en cours d'utilisation et le transmettre, et transmettre audit module matériel de détection identifié ledit message indicatif d'une requête d'accès; autrement transmettre sans modifications ledit message indicatif d'un ensemble de modules matériels de détection des conflits d'accès en cours d'utilisation ; ultérieurement, recevoir à nouveau ledit message indicatif d'un ensemble de modules matériels de détection des conflits d'accès en cours d'utilisation, le mettre à jour pour indiquer que le ou les modules matériels de détection des conflits d'accès associés à la ou aux adresses de mémoire impliquées par ladite transaction ne sont plus en cours d'utilisation et le transmettre ;
- recevoir, d'au moins un module matériel de détection de conflits d'accès, au moins un message de présence ou absence de conflits d'accès et, si au moins un dit message est indicatif de la présence d'un conflit d'accès, transmettre audit ou auxdits modules matériels de détection de conflits d'accès un message d'abandon ou d'annulation de ladite ou de chaque dite requête d'accès ;
- recevoir et stocker un autre message indicatif d'un ensemble de modules matériels de détection des conflits d'accès en cours d'utilisation ; puis recevoir, dudit module initiateur d'accès mémoire, un message indicatif de l'achèvement d'une transaction impliquant une ou plusieurs adresses de ladite mémoire partagée, mettre à jour ledit message indicatif d'un ensemble de modules matériels de détection des conflits d'accès en cours d'utilisation stocké pour indiquer que le ou les modules matériels de détection des conflits d'accès associés à la ou aux adresses de mémoire impliquées par ladite transaction ne sont plus en cours d'utilisation et le transmettre, et transmettre à au moins un module matériel de détection des conflits d'accès au moins un message indicatif d'une requête de libération d'une dite adresse de mémoire partagée, qui n'est plus impliquée dans une transaction.

9. Système de calcul distribué selon la revendication 8 dans lequel lesdits modules matériels d'acquisition (COLL) sont reliés entre eux par un réseau de communication (RCOMM) mettant en oeuvre une technique d'accès exclusif non bloquant.

10. Système de calcul distribué selon la revendication 9 dans lequel lesdits modules matériels d'acquisition sont reliés entre eux par un réseau ayant une topologie logique de type anneau (RA) et sont configurés pour transmettre de proche en proche sur ledit réseau un jeton transportant ledit message indicatif d'un ensemble de modules matériels de détection des conflits d'accès en cours d'utilisation.

11. Système de calcul distribué selon l'une des revendications 7 à 10 comprenant une pluralité de tuiles (T0 - TN), ladite mémoire partagée et un réseau de communication (RCOMM) reliant lesdites tuiles entre elles et à ladite mémoire partagée et au moins un dit module matériel de détection des conflits d'accès (INSP), chaque dite tuile comprenant au moins une dite unité de calcul (UC).

12. Procédé d'utilisation d'un système de calcul distribué selon l'une des revendications précédentes, comprenant les étapes suivantes :
a) utiliser une unité de calcul (UC) pour transmettre à au moins un module matériel de détection de conflit d'accès (INSP) au moins un message indicatif d'une requête d'accès à une adresse d'une mémoire partagée ;
b) utiliser ledit ou chaque dit module matériel de détection de conflits d'accès pour déterminer, à partir d'une structure de données probabiliste respective (FBS), indicative d'un ensemble d'adresses de ladite mémoire partagée (MP) impliquées dans une transaction en cours, si ladite adresse est déjà impliquée dans une transaction en cours, et pour transmettre un message de présence ou absence de conflits d'accès adressé à ladite unité de calcul ;
c) utiliser ladite unité de calcul pour déterminer, à partir du ou des messages de présence ou absence de conflits d'accès reçus dudit ou de chaque dit module matériel de détection, si une transaction impliquant ladite ou chaque adresse de ladite mémoire partagée peut être effectuée ou pas, et pour transmettre audit ou à chaque dit module matériel de détection au moins un message indicatif d'une réservation ou d'une libération d'au moins une dite adresse de ladite mémoire partagée ; et utiliser ledit ou chaque dit module de détection pour mettre à jour ladite structure de données probabiliste pour que les adresses réservées et les adresses libérées soient considérées, respectivement, comme étant/n'étant pas impliquées dans une transaction en cours.

13. Procédé selon la revendication 12, dans lequel :
- ledit système de calcul distribué comprend une pluralité de dites unités de calcul, une dite mémoire partagée et une pluralité de dits modules matériels de détection des conflits d'accès (INSP0 - INSPN), associés chacun à au moins une plage d'adresses (PM0 - PMN) de ladite mémoire partagée ;
- chaque dite unité de calcul comprend un module initiateur d'accès mémoire (PR) et un module matériel d'acquisition (COLL) desdits modules matériels de détection des conflits d'accès ;
dans lequel ladite étape a) comprend les opérations suivantes :
a1) utiliser un module matériel d'acquisition pour recevoir et stocker un message indicatif d'un ensemble de modules matériels de détection des conflits d'accès (INSP) en cours d'utilisation ;
a2) utiliser un module initiateur d'accès mémoire (PR) associé audit module matériel d'acquisition pour transmettre audit module matériel d'acquisition au moins un dit message indicatif d'une requête d'accès à une adresse de ladite mémoire partagée ;
a3) utiliser ledit module matériel d'acquisition pour identifier le ou les modules matériels de détection des conflits d'accès associés à ladite ou à chaque dite adresse de mémoire ;
a4) déterminer, au moyen dudit message indicatif d'un ensemble de modules matériels de détection des conflits d'accès en cours d'utilisation (J), si le ou les modules matériels de détection des conflits d'accès associés à ladite ou à chaque dite adresse mémoire de la transaction sont en cours d'utilisation et : s'ils ne le sont pas, leur transmettre ledit message indicatif d'une requête d'accès, mettre à jour ledit message indicatif d'un ensemble de modules matériels de détection des conflits d'accès en cours d'utilisation pour indiquer que ledit ou chaque dit module matériel de détection des conflits d'accès (INSP) est désormais en cours d'utilisation et le transmettre ; autrement le transmettre sans modification ;
et dans lequel ladite étape b) comprend les opérations suivantes :
b1) utiliser ledit module matériel d'acquisition pour recevoir, d'au moins un module matériel de détection de conflits d'accès, au moins un message de présence ou absence de conflits d'accès et, si ledit ou tous lesdits messages sont indicatifs d'une absence de conflits d'accès, transmettre audit ou auxdits modules matériels de détection de conflits d'accès des messages confirmatifs desdites requêtes d'accès ;
b2) utiliser ledit module matériel d'acquisition (COLL) pour recevoir un message indicatif qu'une transaction impliquant une ou plusieurs adresses de ladite mémoire partagée s'est achevée, mettre à jour ledit message indicatif d'un ensemble de modules matériels de détection des conflits d'accès en cours d'utilisation (J) pour indiquer que le ou les modules matériels d'acquisition associés à la ou aux adresses de mémoires impliquées par ladite transaction ne sont plus en cours d'utilisation et le transmettre.

14. Procédé selon la revendication 13 dans lequel lesdits modules matériels d'acquisition sont reliés entre eux par un réseau de communication (RA) mettant en oeuvre une technique d'accès exclusif non bloquant.

15. Procédé selon la revendication 14 dans lequel lesdits modules matériels d'acquisition sont reliés entre eux par un réseau ayant une topologie logique de type anneau, ledit message indicatif d'un ensemble de modules matériels de détection des conflits d'accès en cours d'utilisation (J) étant transmis de proche en proche sur ledit réseau.

## Patentansprüche

1. System für verteiltes Rechnen, beinhaltend eine Vielzahl von Recheneinheiten (UC) und mindestens einen geteilten Hardware-Speicher (MF) zwischen den Recheneinheiten, ebenfalls beinhaltend mindestens ein Hardwaremodul zur Erkennung von Zugriffskonflikten (INSP) der Recheneinheiten auf den geteilten Speicher; **dadurch gekennzeichnet, dass** das oder ein jedes Hardwaremodul zur Erkennung von Zugriffskonflikten Folgendes beinhaltet:
- mindestens einen ersten Bloom-Hardwarefilter (FBT) zur zeitweiligen Speicherung einer ersten probabilistischen Datenstruktur, welche mindestens eine Adresse des geteilten Speichers anzeigt, für welche eine Zugriffsanforderung empfangen wurde;
- mindestens einen ersten Bloom-Hardwarefilter (FBS) vom Typ mit Zählung, zur Speicherung einer zweiten probabilistischen Datenstruktur, welche sämtliche Adressen des geteilten Speichers anzeigt, die in die Gesamtheit der bereits laufenden Transaktionen involviert sind;
- mindestens ein Zerhackerfunktions-Modul (FHM) zum Adressieren des ersten und des zweiten Bloom-Filters; und
- eine Logikschaltung (CMP, CTRI), konfiguriert zum:
- Empfangen einer Meldung mit Anzeige einer Zugriffsanforderung, durch eine solche Recheneinheit, an mindestens einer Adresse des geteilten Speichers; Aktualisieren der ersten probabilistischen Datenstruktur, welche im ersten Bloom-Hardwarefilter gespeichert ist, damit diese die Adresse anzeigt; Ermitteln, anhand der in dem ersten und in dem zweiten Bloom-Filter gespeicherten probabilistischen Datenstrukturen, ob die Adresse bereits in eine laufende Transaktion involviert ist; Erzeugen und Übertragen an die Recheneinheit einer Meldung über Vorliegen oder Nichtvorliegen von Zugriffskonflikten; und zum
- Empfangen mindestens einer Meldung mit Anzeige oder Bestätigung einer Reservierung oder einer Freigabe mindestens einer solchen Adresse des geteilten Speichers, und Aktualisieren der zweiten probabilistischen Datenstruktur, welche im zweiten Bloom-Hardwarefilter gespeichert ist, damit die reservierten und die freigegebenen Adressen jeweils als in eine laufende Transaktion involviert/nicht involviert betrachtet werden.

2. System für verteiltes Rechnen nach Anspruch 1, bei welchem die logische Schaltung des oder eines jeden Hardwaremoduls zur Erkennung von Konflikten konfiguriert ist zum:
- Empfangen mindestens einer ersten Art von Meldung mit Anzeige einer Zugriffsanforderung, durch eine solche Recheneinheit, an mindestens einer Adresse des geteilten Speichers;
- Ermitteln, anhand der probabilistischen Datenstruktur, ob die Adresse bereits in eine laufende Transaktion involviert ist, und Übertragen an die Recheneinheit mindestens einer zweiten Art von Meldung über Vorliegen oder Nichtvorliegen von Zugriffskonflikten;
- Empfangen mindestens einer dritten Art von Meldung mit Anzeige einer Anforderung auf Freigabe einer solchen Adresse des geteilten Speichers, die nicht mehr in eine Transaktion involviert ist und entsprechendes Aktualisieren der probabilistischen Datenstruktur; und
- Empfangen mindestens einer vierten Art von Meldung mit Anzeige einer Validierung oder einer Aufgabe mindestens einer solchen Zugriffs- oder Freigabeanforderung, und im Falle der Validierung, entsprechendes Aktualisieren der probabilistischen Datenstruktur.

3. System für verteiltes Rechnen nach Anspruch 2, bei welchem die logische Schaltung konfiguriert ist zum Erzeugen einer Meldung des zweiten Typs durch Vergleich zwischen den im ersten und im zweiten Bloom-Hardwarefilter gespeicherten probabilistischen Datenstrukturen, und zum Aktualisieren der im zweiten Bloom-Hardwarefilter gespeicherten probabilistischen Datenstruktur anhand derjenigen, die zeitweilig im ersten Bloom-Filter nach dem Empfang einer Meldung des vierten Typs gespeichert wird, welche eine Validierung einer Zugriffs-oder einer Freigabeanforderung einer Adresse des geteilten Speichers anzeigt.

4. System für verteiltes Rechnen nach Anspruch 3, bei welchem der erste Bloom-Hardwarefilter (FBT) ebenfalls ein Filter vom Typ mit Zählung ist.

5. System für verteiltes Rechnen nach einem der Ansprüche 3 oder 4, bei welchem das oder jedes Hardwaremodul zur Erkennung von Zugriffskonflikten ein erstes Paar Bloom-Filter (FBTL, FBSL) zur Erkennung von Lese-Zugriffskonflikten und ein zweites Paar Bloom-Filter (FBTE, FBSE) zur Erkennung von Schreib-Zugriffskonflikten beinhaltet.

6. System für verteiltes Rechnen nach einem der vorhergehenden Ansprüche, beinhaltend eine Vielzahl von solchen Hardwaremodulen zur Erkennung von Zugriffskonflikten (INSPO - INSPN), wobei ein jedes davon mit einem Segment (PMO - PMN) des geteilten Speichers assoziiert ist.

7. System für verteiltes Rechnen nach Anspruch 6, bei welchem jede Recheneinheit ein Speicherzugriffs-Initiierungsmodul (PR) und ein Hardware-Erfassungsmodul (COLL) der Hardwaremodule zur Erkennung von Zugriffskonflikten beinhaltet, wobei jedes Hardware-Erfassungsmodul konfiguriert ist, um eine ausschließliche und atomische Erfassung des oder der zur Detektion der Zugriffskonflikte für eine Transaktion notwendigen Hardwaremoduls/Hardwaremodule zur Erkennung von Zugriffskonflikten vorzunehmen.

8. System für verteiltes Rechnen nach Anspruch 7, bei welchem die logische Schaltung eines jeden Hardware-Erfassungsmoduls konfiguriert ist zum:
- Empfangen mindestens einer Meldung mit Anzeige einer Zugriffsanforderung, durch das Speicherzugriffs-Initiierungsmodul, an einer Adresse des geteilten Speichers; und Identifizieren, anhand dieser Meldung, des mit der Adresse assoziierten Hardwaremoduls zur Erkennung von Zugriffskonflikten;
- Empfangen und Speichern einer Meldung mit Anzeige einer Gruppe von Hardwaremodulen zur Erkennung von Zugriffskonflikten in Benutzung; danach Ermitteln, anhand der gespeicherten Meldung, ob das identifizierte Hardware-Erkennungsmodul in Benutzung ist; ist es das nicht, Aktualisieren der Meldung mit Anzeige einer Gruppe von Hardwaremodulen zur Erkennung von Zugriffskonflikten in Benutzung zur Anzeige, dass das Hardwaremodul zur Erkennung von Zugriffskonflikten nunmehr in Benutzung ist und Übertragen der Meldung, und Übertragen, an das identifizierte Hardware-Erkennungsmodul, der Meldung mit Anzeige einer Zugriffsanforderung; ansonsten, Übertragen ohne Änderungen der Meldung mit Anzeige einer Gruppe von Hardwaremodulen zur Erkennung von Zugriffskonflikten in Benutzung; zu einem späteren Zeitpunkt, erneutes Empfangen der Meldung mit Anzeige einer Gruppe von Hardwaremodulen zur Erkennung von Zugriffskonflikten in Benutzung, Aktualisieren der Meldung zur Anzeige, dass das oder die Hardwaremodul(e) zur Erkennung von Zugriffskonflikten, welche(s) mit der oder den Speicheradresse(n) assoziiert ist/sind, welche in die Transaktion involviert ist/sind, nicht mehr in Benutzung ist/sind, und Übertragen der Meldung;
- Empfangen, von mindestens einem Hardwaremodul zur Erkennung von Zugriffskonflikten, mindestens einer Meldung über Vorliegen oder Nichtvorliegen von Zugriffskonflikten, und wenn mindestens eine solche Meldung das Vorliegen eines Zugriffskonfliktes anzeigt, Übertragen an das oder die Hardwaremodul(e) zur Erkennung von Zugriffskonflikten einer Meldung über Aufgabe oder Annullierung der oder einer jeden solchen Zugriffsanforderung;
- Empfangen und Speichern einer anderen Meldung mit Anzeige einer Gruppe von Hardwaremodulen zur Erkennung von Zugriffskonflikten in Benutzung; danach Empfangen, vom Speicherzugriffs-Initiierungsmodul, einer Meldung mit Anzeige der Beendigung einer Transaktion, welche eine oder mehrere Adressen des geteilten Speichers involviert, Aktualisieren der gespeicherten Meldung mit Anzeige einer Gruppe von Hardwaremodulen zur Erkennung von Zugriffskonflikten in Benutzung, um anzuzeigen, dass das oder die mit der oder den in die Transaktion involvierten Adresse(n) assoziierte(n) Hardwaremodul(e) zur Erkennung von Zugriffskonflikten nicht mehr in Benutzung ist/sind und Übertragen der Meldung, und Übertragen an mindestens ein Hardwaremodul zur Erkennung von Zugriffskonflikten mindestens einer Meldung mit Anzeige einer Freigabeanforderung einer solchen Adresse des geteilten Speichers, die nicht mehr in eine Transaktion involviert ist.

9. System für verteiltes Rechnen nach Anspruch 8, bei welchem die Hardware-Erfassungsmodule (COLL) untereinander über ein Kommunikationsnetzwerk (RCOMM) verbunden sind, welches eine ausschließliche, nicht blockierende Zugriffstechnik umsetzt.

10. System für verteiltes Rechnen nach Anspruch 9, bei welchem die Hardware-Erfassungsmodule untereinander über ein Netzwerk verbunden sind, welches eine logische Topologie vom Typ Ring (RA) aufweist, und konfiguriert sind, um von Modul zu Modul innerhalb des Netzwerks ein Token zu übertragen, welches die Meldung mit Anzeige einer Gruppe von Hardwaremodulen zur Erkennung von Zugriffskonflikten in Benutzung transportiert.

11. System für verteiltes Rechnen nach einem der Ansprüche 7 bis 10, beinhaltend eine Vielzahl von Kacheln (TO - TN), den geteilten Speicher und ein Kommunikationsnetzwerk (RCOMM), welches die Kacheln miteinander und mit dem geteilten Speicher verbindet, und mindestens ein solches Hardwaremodul zur Erkennung von Zugriffskonflikten (INSP), wobei jede Kachel mindestens eine solche Recheneinheit (UC) beinhaltet.

12. Verfahren zur Benutzung eines Systems für verteiltes Rechnen nach einem der vorhergehenden Ansprüche, welches folgende Schritte beinhaltet:
a) Benutzen einer Recheneinheit (UC) zum Übertragen an mindestens ein Hardwaremodul zur Erkennung Zugriffskonflikten (INSP) von mindestens einer Meldung mit Anzeige einer Zugriffsanforderung an eine Adresse eines geteilten Speichers;
b) Benutzen des oder eines jeden solchen Hardwaremoduls zur Erkennung von Zugriffskonflikten zum Ermitteln, anhand einer jeweiligen probabilistischen Datenstruktur (FBS) mit Anzeige einer Gruppe von Adressen des geteilten Speichers (MP), welche in eine laufende Transaktion involviert sind, ob die Adresse bereits in eine laufende Transaktion involviert ist, und zum Übertragen einer Meldung über Vorliegen oder Nichtvorliegen von an die Recheneinheit adressierten Zugangskonflikten;
c) Benutzen der Recheneinheit zum Ermitteln, anhand der oder mehrerer Meldung(en) über Vorliegen oder Nichtvorliegen von Zugriffskonflikten, welche von dem oder von einem jeden solchen Hardwaremodul zur Erkennung von Zugriffskonflikten empfangen wurde(n), ob eine Transaktion, in welche die oder eine jede Adresse des geteilten Speichers involviert ist, durchgeführt werden kann oder nicht, und zum Übertragen an das oder an ein jedes solches Hardware-Erkennungsmodul mindestens einer Meldung mit Anzeige einer Reservierung oder einer Freigabe mindestens einer solchen Adresse des geteilten Speichers; und Benutzen des oder eines jeden solchen Erkennungsmoduls zum Aktualisieren der probabilistischen Datenstruktur, damit die reservierten Adressen und die freigegebenen Adressen jeweils als in eine laufende Transaktion involviert/nicht involviert betrachtet werden.

13. Verfahren nach Anspruch 12, bei welchem:
- das System für verteiltes Rechnen eine Vielzahl von solchen Recheneinheiten beinhaltet, einen solchen geteilten Speicher und eine Vielzahl von solchen Hardwaremodulen zur Erkennung von Zugriffskonflikten (INSPO - INSPN), wobei jedes davon mit mindestens einem Adressenbereich (PMO - PMN) des geteilten Speichers assoziiert ist;
- eine jede solche Recheneinheit ein Speicherzugriffs-Initiierungsmodul (PR) und ein Hardware-Erfassungsmodul (COLL) der Hardwaremodule zur Erkennung von Zugriffskonflikten beinhaltet;
wobei der Schritt a) folgende Operationen beinhaltet:
a1) Benutzen eines Hardware-Erfassungsmoduls zum Empfangen und Speichern einer Meldung mit Anzeige einer Gruppe von Hardwaremodulen zur Erkennung von Zugriffskonflikten (INSP) in Benutzung;
a2) Benutzen eines Speicherzugriffs-Initiierungsmodul (PR), welches mit dem Hardware-Erfassungsmodul assoziiert ist, um mindestens eine solche Meldung mit Anzeige einer Zugriffsanforderung an eine Adresse des geteilten Speichers an das Hardware-Erfassungsmodul zu übertragen;
a3) Benutzen des Hardware-Erfassungsmoduls zum Identifizieren des Hardwaremoduls oder der Hardwaremodule zur Erkennung von Zugriffskonflikten, welche(s) mit der oder einer jeden solchen Speicheradresse assoziiert ist/sind;
a4) Ermitteln, anhand der Meldung mit Anzeige einer Gruppe von Hardwaremodulen zur Erkennung von Zugriffskonflikten in Benutzung (J), ob das oder die Hardwaremodul(e) zur Erkennung von Zugriffskonflikten in Benutzung ist/sind, welche mit der oder einer jeden solchen Speicheradresse der Transaktion assoziiert sind, und: wenn sie dies nicht sind, Übermitteln an die Module der Meldung mit Anzeige einer Zugriffsanforderung, Aktualisieren der Meldung mit Anzeige einer Gruppe von Hardwaremodulen zur Erkennung von Zugriffskonflikten in Benutzung, um anzuzeigen, dass das oder ein jedes solches Hardwaremodul zur Erkennung von Zugriffskonflikten (INSP) nunmehr in Benutzung ist und Übertragen der Meldung, und ansonsten Übertragen der Meldung ohne Änderung;
und wobei der Schritt b) folgende Operationen beinhaltet:
b1) Benutzen des Hardware-Erfassungsmoduls zum Empfangen, von mindestens einem Hardwaremodul zur Erkennung von Zugriffskonflikten, mindestens einer Meldung über Vorliegen oder Nichtvorliegen von Zugriffskonflikten, und, wenn die oder alle solche Meldungen ein Nichtvorliegen von Zugriffskonflikten anzeigt/anzeigen, Übertragen von Meldungen zur Bestätigung der Zugriffsanforderungen an das oder die Hardwaremodul(e) zur Erkennung von Zugriffskonflikten;
b2) Benutzen des Hardware-Erfassungsmoduls (COLL) zum Empfangen einer Meldung mit Anzeige darüber, dass eine Transaktion, welche eine oder mehrere Adressen des geteilten Speichers involviert, beendet ist, Aktualisieren der Meldung mit Anzeige einer Gruppe von Hardwaremodulen zur Erkennung von Zugriffskonflikten in Benutzung (J) zur Anzeige, dass das oder die Hardwaremodul(e) zur Erkennung von Zugriffskonflikten, welche(s) mit der oder den Speicheradresse(n) assoziiert ist/sind, welche in die Transaktion involviert ist/sind, nicht mehr in Benutzung ist/sind, und Übertragen der Meldung.

14. Verfahren nach Anspruch 13, bei welchem die Hardware-Erfassungsmodule untereinander über ein Kommunikationsnetzwerk (RA) verbunden sind, welches eine ausschließliche, nicht blockierende Zugriffstechnik umsetzt.

15. Verfahren nach Anspruch 14, bei welchem die Hardware-Erfassungsmodule untereinander über ein Netzwerk verbunden sind, welches eine logische Topologie vom Typ Ring aufweist, wobei die Meldung mit Anzeige einer Gruppe von Hardwaremodulen zur Erkennung von Zugriffskonflikten in Benutzung (J) von Modul zu Modul innerhalb des Netzwerks übertragen wird.

## Claims

1. A distributed computation system comprising a plurality of computation units (UC) and at least one shared memory (MP) shared between said computation units, also comprising at least one hardware module for detecting conflicts of access (INSP) of said computation units to said shared memory; **characterised in that** said or each said hardware module for detecting conflicts comprises:
- at least one first hardware Bloom filter (FBT) for temporarily storing a first probabilistic data structure, indicative of at least one address of said shared memory for which an access request has been received;
- at least one second hardware Bloom filter (FBS), of the counting type, for storing a second probabilistic data structure, indicative of all the addresses of said shared memory involved in all the transactions already in progress;
- at least one hash function module (FHM) for addressing said first and second Bloom filters; and
- a logic circuit (CMP, CTRI) configured to:
- receive a message indicative of a request for access, by one said computation unit, at at least one address of said shared memory; update the first probabilistic data structure stored in the first hardware Bloom filter for it to be indicative of said address; determine, from the probabilistic data structures stored in said first and second Bloom filters, whether said address is already involved in a current transaction; generate and transmit to said computation unit a message indicating presence or absence of access conflicts; and to
- receive at least one message indicative of or confirming a reservation or a release of at least one said address of said shared memory, and update said second probabilistic data structure stored in the second hardware Bloom filter for the reserved addresses and the released addresses to be considered, respectively, as being/not being involved in a current transaction.

2. The distributed computation system according to Claim 1, wherein said logic circuit of said or of each said hardware module for detecting conflicts is configured to:
- receive at least one first type of message indicative of a request for access, by one said computation unit, to at least one address of said shared memory;
- determine, from said probabilistic data structure, whether said address is already involved in a current transaction, and transmit to said computation unit at least one second type of message indicating presence or absence of access conflicts;
- receive at least one third type of message indicative of a request to release one said shared memory address, which is no longer involved in a transaction and update said probabilistic data structure accordingly; and
- receive at least one fourth type of message, indicative of a validation or of an aborting of at least one said access or release request and, in case of validation, update said probabilistic data structure accordingly.

3. The distributed computation system according to Claim 2, wherein said logic circuit is configured to generate a message of said second type by comparison between the probabilistic data structures stored in said first and said second hardware Bloom filters, and to update said probabilistic data structure stored in said second hardware Bloom filter on the basis of that stored temporarily in said first Bloom filter following the reception of a message of said fourth type, indicative of a validation of a request to access or release an address of said shared memory.

4. The distributed computation system according to Claim 3, wherein said first hardware Bloom filter (FBT) is also of the counting type.

5. The distributed computation system according to either of Claims 3 or 4, wherein said or each said hardware module for detecting access conflicts comprises a first pair of Bloom filters (FBTL, FBSL) for the detection of read access conflicts and a second pair of Bloom filters (FBTE, FBSE) for the detection of write access conflicts.

6. The distributed computation system according to any of the preceding claims, comprising a plurality of said hardware modules for detecting access conflicts (INSP0 - INSPN), each associated with a segment (PM0 - PMN) of said shared memory.

7. The distributed computation system according to Claim 6, wherein each computation unit comprises a memory access initiator module (PR) and a hardware acquisition module (COLL) for said hardware modules for detecting access conflicts, each said hardware acquisition module being configured to perform an exclusive and atomic acquisition of the hardware module or modules for detecting access conflicts necessary to the detection of the access conflicts for a transaction.

8. The distributed computation system according to Claim 7, wherein said logic circuit of each said hardware acquisition module is configured to:
- receive at least one message indicative of a request for access, by said memory access initiator module, to an address of said shared memory; and identify, from this message, the hardware module for detecting access conflicts associated with said address;
- receive and store a message indicative of a set of hardware modules for detecting access conflicts currently being used; then determine, by means of said stored message, whether said identified hardware detection module is currently being used and: if it is not, update said message indicative of a set of hardware modules for detecting access conflicts currently being used to indicate that said hardware module for detecting access conflicts is now currently being used and transmit it, and transmit to said identified hardware detection module said message indicative of an access request; otherwise transmit, without modifications, said message indicative of a set of hardware modules for detecting access conflicts currently being used; subsequently, once again receive said message indicative of a set of hardware modules for detecting access conflicts currently being used, update it to indicate that the hardware module or modules for detecting access conflicts associated with the memory address or addresses involved in said transaction are no longer currently being used and transmit it;
- receive, from at least one hardware module for detecting access conflicts, at least one message indicating presence or absence of access conflicts and, if at least one said message is indicative of the presence of an access conflict, transmit to said hardware module or modules for detecting access conflicts a message to abort or cancel said or each said access request;
- receive and store another message indicative of a set of hardware modules for detecting access conflicts currently being used; then receive, from said memory access initiator module, a message indicative of the completion of a transaction involving one or more addresses of said shared memory, update said stored message indicative of a set of hardware modules for detecting access conflicts currently being used to indicate that the hardware module or modules for detecting access conflicts associated with the memory address or addresses involved in said transaction are no longer currently being used and transmit it, and transmit to at least one hardware module for detecting access conflicts at least one message indicative of a request to release one said shared memory address, which is no longer involved in a transaction.

9. The distributed computation system according to Claim 8, wherein said hardware acquisition modules (COLL) are linked together by a communication network (RCOMM) implementing a non-blocking exclusive access technique.

10. The distributed computation system according to Claim 9, wherein said hardware acquisition modules are linked together by a network having a logical topology of ring type (RA) and are configured to transmit over said network, from one module to its neighbour, a token conveying said message indicative of a set of hardware modules for detecting access conflicts currently being used.

11. The distributed computation system according to any of Claims 7 to 10, comprising a plurality of tiles (T0 - TN), said shared memory and a communication network (RCOMM) linking said tiles together and to said shared memory and at least one said hardware module for detecting access conflicts (INSP), each said tile comprising at least one said computation unit (UC).

12. A method for using a distributed computation system according to any of the preceding claims, comprising the following steps:
a) using a computation unit (UC) to transmit to at least one hardware module for detecting access conflict (INSP) at least one message indicative of a request to access an address of a shared memory;
b) using said or each said hardware module for detecting access conflicts to determine, from a respective probabilistic data structure (FBS), indicative of a set of addresses of said shared memory (MP) involved in a current transaction, whether said address is already involved in a current transaction, and to transmit a message indicating presence or absence of access conflicts addressed to said computation unit;
c) using said computation unit to determine, from the message or messages indicating presence or absence of access conflicts received from said or from each said hardware detection module, whether a transaction involving said or each address of said shared memory can or cannot be performed, and to transmit to said or to each said hardware detection module at least one message indicative of a reservation or of a releasing of at least one said address of said shared memory; and using said or each said detection module to update said probabilistic data structure for the reserved addresses and the released addresses to be considered, respectively, as being/not being involved in a current transaction.

13. The method according to Claim 12, wherein:
- said distributed computation system comprises a plurality of said computation units, one said shared memory and a plurality of said hardware modules for detecting access conflicts (INSP0 - INSPN), each associated with at least one range of addresses (PM0 - PMN) of said shared memory;
- each said computation unit comprises a memory access initiator module (PR) and a hardware acquisition module (COLL) for said hardware modules for detecting access conflicts;
wherein said step a) comprises the following operations:
a1) using a hardware acquisition module to receive and store a message indicative of a set of hardware modules for detecting access conflicts (INSP) currently being used;
a2) using a memory access initiator module (PR) associated with said hardware acquisition module to transmit to said hardware acquisition module at least one said message indicative of a request to access an address of said shared memory;
a3) using said hardware acquisition module to identify the hardware module or modules for detecting access conflicts associated with said or with each said memory address;
a4) determining, by means of said message indicative of a set of hardware modules for detecting access conflicts currently being used (J), whether the hardware module or modules for detecting access conflicts associated with said or with each said memory address of the transaction are currently being used and if they are not, transmitting to them said message indicative of an access request, updating said message indicative of a set of hardware modules for detecting access conflicts currently being used to indicate that said or each said hardware module for detecting access conflicts (INSP) is now currently being used and transmitting it; otherwise transmitting it without modification;
and wherein said step b) comprises the following operations:
b1) using said hardware acquisition module to receive, from at least one hardware module for detecting access conflicts, at least one message indicating presence or absence of access conflicts and, if said or all said messages are indicative of an absence of access conflicts, transmitting to said hardware module or modules for detecting access conflicts messages confirming said access requests;
b2) using said hardware acquisition module (COLL) to receive a message indicative that a transaction involving one or more addresses of said shared memory is completed, updating said message indicative of a set of hardware modules for detecting access conflicts currently being used (J) to indicate that the hardware acquisition module or modules associated with the memory address or addresses involved in said transaction are no longer currently being used and transmitting it.

14. The method according to Claim 13, wherein said hardware acquisition modules are linked together by a communication network (RA) implementing a non-blocking exclusive access technique.

15. The method according to Claim 14, wherein said hardware acquisition modules are linked together by a network having a logical topology of ring type, said message indicative of a set of hardware modules for detecting access conflicts currently being used (J) being transmitted over said network from a module to its neighbour.
